# EUROPEAN PATENT APPLICATION

(11) **EP 2 006 797 A2**
(43) Date of publication of application: **24.12.2008**
(21) Application number: 07738165.5
(22) Date of filing: 09.03.2007
(51) Int. Cl.: G06K 19/07, B41J 29/00, B41J 29/38, G03G 15/00, G06K 17/00, H04N 1/00

(54) **WIRELESS IC TAG, DOCUMENT MEDIUM, AND INFORMATION PROCESSOR**

(30) Priority: 09.03.2006 JP 2006063886
(71) Applicant: Panasonic Corporation, Kadoma-shi Osaka 571-8501 (JP)
(72) Inventor: MIYASO, Hiroaki, (JP)
(74) Representative: Dempster, Benjamin John Naftel
(86) International application number: PCT/JP2007/054680
(87) International publication number: WO 2007/105634

(57) **Abstract**

Even in the bound form of a document composed of document sheets, the tag information on each document sheet can be read. When the documents sheet are printed by two-sided printing, the tag information on each page of the document sheet can be read by detecting the front and back of the sheet in a simple manner. Information is exchanged between a wireless IC tag (1) and a reader upon receipt of a radio wave from the reader. When a received right signal is obtained by receiving an outside light, no response to the reader is sent to depending on the received light signal. The tag information to be exchanged includes, as its part, the received light information corresponding to the received light signal. With this, even if only such a single wireless IC tag is used, by changing the direction of the illuminating light which is an outside light to the document sheet provided with the tag, the tag information can be changed for each direction of the illuminating light correspondingly to the number of directions in any one of which the outside light can be received.

## Description

### Technical Field

The present invention relates to a wireless IC tag that can store information, and where electric power is supplied wirelessly, that can perform data communication via electromagnetic induction or radio waves; a reader that exchanges information with the tag; and an information processor, such as a digital multifunction apparatus, that creates a manuscript by reading an image on a document sheet or a print sheet that is a paper or a film (hereafter, simply referred to as paper) where the tag is arranged, and that prints the manuscript onto another sheet and copies the document sheet.

### Background Technology

There is a commercialized digital multifunction apparatus, wherein a manuscript is created by reading an image on a sheet of a document using a paper or a film as a recording medium (hereafter, a recording medium of a document is referred to as a document sheet), the manuscript is printed onto another paper, and then the document is copied. At the printing, the read image is set as a manuscript image and the manuscript image data is stored in a storage device; concurrently, a pattern image containing information indicating the manuscript image data, such as a barcode, is printed onto another sheet by attaching the manuscript image. When a sheet thus printed (referred to as printed paper) is copied by said digital multifunction apparatus, the barcode on the document sheet is read and the manuscript image data is searched and extracted from the storage device based upon the information contained in the barcode, and the printing is conducted based upon the extracted data. Since the copying is repeated based upon the printed sheet that is a sheet copied from the original document, the image quality of the printed image will not be deteriorated. Herein, a pattern image, such as barcodes, functions as an available recording means for recording information that can be read easily from the pattern image in a contactless manner by an optical means, like a barcode reader.

Then, as a means equivalent to the barcode having such function, there is a contactless IC (integrated circuit) card and a wireless IC tag, which can record considerably much information compared to the barcodes. The contactless IC card and the wireless IC tag include a tiny IC memory chip, and supplied with electric power in contactless manner from a corresponding reader (data reader), and the data recorded therein can be read therefrom, so that they are widely used by attaching to various daily goods, such as a commuter pass of transportation, postal mails, or luggage.

The wireless IC tag (also simply referred to as a 'tag') exchanges the recorded data therein (called 'tag information' hereinafter) including function/operation control information and other information with a wireless IC tag reader (simply referred to a 'reader') via electromagnetic induction or radio waves. (Furthermore, in the specification, the 'reader' simply means not only a unit having a function for reading information from the tag, but also a unit having a function for writing information on the tag, and 'exchanging data' means reading from and writing on the tag.) Within a range depending on the directivity, spatial conditions between the IC tag and the reader, such as a direction, an orientation, an optical blocking, and etc., are less limited rather than the barcode. However, where the wireless IC tag is applied to a print sheet, a postal mail or a luggage, there is a unique problem that will never occur to a case where data can be exchanged between the reader and each sheet, such as a commuter pass.

In other words, when the wireless IC tag is applied to the postal mail, the luggage or the print sheet, a situation where many tags are situated closer with each other could often be happened. Even under such situation, the wireless IC tag is required to perform data exchange with the reader. However, in this case, because of mutual inductance between antennas of tags, that is, the tag is influenced by the mutual inductance with other adjacent tag, and the tag cannot receive electric power enough to operate the IC.

Then, the wireless IC tag shown in Patent Literature 1 has a light receiving element built-in at a specific position of the tag, and only when light from the outside is received, radio waves (carrier wave) received by the antenna of the tag are supplied to an internal power source generating means, and the tag exchanges data with a reader. According to such configuration, even under a situation where many tags form a group, the light is irradiated to the specific position, so that it prevents simultaneous operations of a plurality of tags, and sufficient electric power can be supplied to the subject tag.

Patent Literature 2 suggests a system wherein a printer or a digital multifunction apparatus uses the wireless IC tag as described above instead of the pattern image such as the barcode, and the deterioration of the print picture quality can be prevented when the copying is repeated based on the print sheet printing a manuscript image thereon and being attached with the tag on a part thereof.
[Patent Literature 1] JP 2003-317050 A (Pages 3, 5 and 9, Figs. 2, 4, and 6 to 8)
[Patent Literature 2] JP 2004-249499 A

### Summary of the Invention

However, if the wireless IC tag with the conventional configuration shown in Patent Literature 2 is used in a form of a document where a plurality of document sheets, such as printed paper having the tags, are bound, when exchanging data with a reader, as described in Patent Literature 1, there is a problem that adjacent tags are influenced with each other if nothing is modified in the form.

Further, even if the influence is controlled, when copying a document, when a document sheet is copied one by one, since radio waves from the reader reaches not only a specific one document sheet, which is a subject for copying, but also other document sheets; the wireless IC tags attached to the other document sheets might respond to the reader, and this is a problem that data cannot be exchanged only between the reader and one specific sheet, which is a subject for copying. Consequently, with this tag, when only a specific document sheet from a document where a plurality of document sheets having the tags are bound is copied, it is necessary to extract the one specific document sheet and to place it on a platen, and, it is also necessary to place the original binder where the one particular sheet has been extracted far enough from the platen in order to avoid the other tags contained in the binder responding to the reader.

Further, even if a document sheet to be copied is placed on the platen one by one, since the wireless IC tag still equally receives radio waves from the reader regardless of which surface of the document sheet, a front surface or a back surface, is facing toward the reader; for example, when a document sheet to be copied is a printed paper with two-sided printing, even if only the back surface of the document sheet is desired to be copied, there is another problem that a response to distinguish that the subject for copying is either the front surface or the back surface cannot be made. Then, this problem will not be solved even how the tag with the conventional configuration is attached to a print sheet, in other words, even a surface where the tag is attached is set to not only one surface but both surfaces of the print sheet, or even the direction/orientation of the attachment is changed. Therefore, this tag is no good with use/purpose of two-sided printing in a print sheet.

In the meantime, the wireless IC tag shown in Patent Literature 1 has a configuration to avoid simultaneous operations and to sequentially operate the tags when a plurality of tags exists. However, the usage mode is assumed, as shown in Figs. 2, 4, and 6 to 8 in the Patent Literature 1, that the plurality of tags are placed in predetermined positions with the laminated and aligned condition due to a give shape of case, thus the plurality of tags have to be laminated and the positions of light receiving elements have to be aligned. Therefore, in order to realize that the tag information per document sheet can be read even in the form of a document where a plurality of document sheets are bound, on the condition that these tags are attached to the printed sheets, respectively, it is necessary to accurately align the attachment positions of tags to the print sheets, and even when the document sheets are piled as a document where a plurality of sheet are bound, it is necessary that the document sheets have the same direction/orientation and are accurately piled in position.

Further, as described on page 9 of the patent literature 1, said wireless IC tags also aims at enabling to use regardless of front or back of the subject where the tags are contained or attached; therefore, it is natural that they do not have a function to distinguish the front or back of the tag, and cannot exchange different data between the front surface and the back surface, thus as similar to the case of the tags shown in Patent Literature 2, they cannot be utilized for the use/objective where the front and back of an object where the tags are contained or attached should be distinguished.

As described above, the wireless IC tag described in Patent Literature 1 causes the problem when it needs to be designed such that tag information can be read per page of the document sheet even in the document form where a plurality of document sheets are bound.

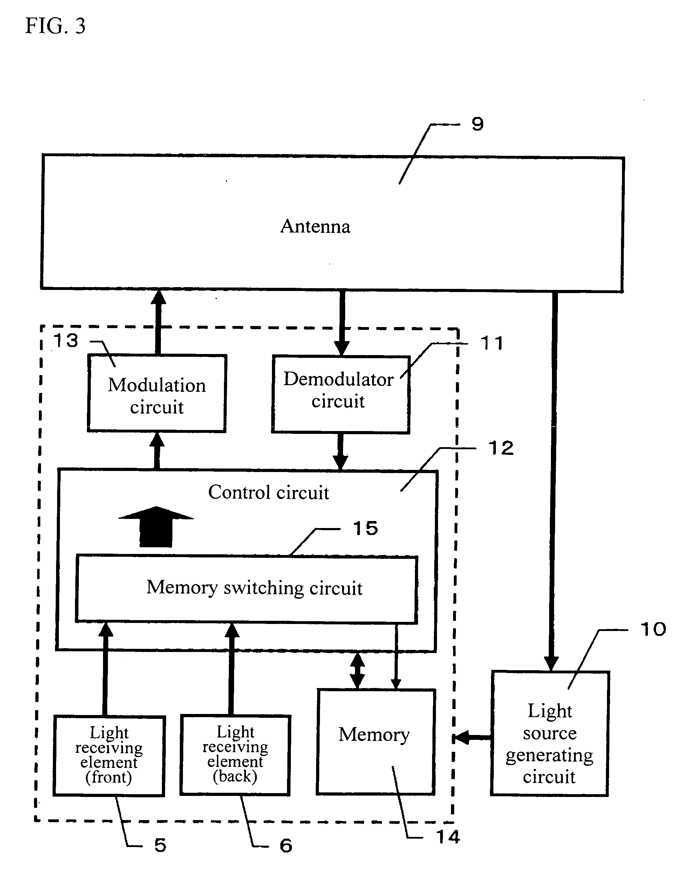

In addition, for the wireless IC tag described in Patent Literature 1, as a configuration to detect a light on a front surface or a back surface, or, both surfaces where the tags are contained or attached, Fig. 3 shows a configuration where light receiving elements are equipped on both of the front and back surfaces of the tags, and two light receiving elements are required for this configuration, respectively. In the meantime, as a tag whose use is attached to a print sheet, in general, the print sheet itself should be inexpensive; consequently, a configuration where a circuit scale can be reduced and cost can be kept low is further in demand.

The present invention is for resolving these conventional problems, and the objective is to provide a wireless IC tag where tag information per document sheet can be read even in a document format where a plurality of document sheets are bound, and where tag information per page of the document sheet can be read by distinguishing between front and back surfaces using a simple configuration in a document sheets whose both sides are printed; a reader that exchanges information with the tag; and an information processor, such as a digital multifunction apparatus, using paper where the tag is arranged, and considering the paper as a document sheet or a print sheet.

In order to accomplish the objective, the present invention is a wireless IC tag that is attached to a tangible entity or is arranged by being included in a portion, where information can be stored and electric power is supplied, and that performs data communication with a reader existing outside the tangible entity via electromagnetic induction or radio waves, and can exchange information stored in said tag or other tag information with the reader, comprising an outside light receiving means that distinguishes an outside light in a plurality of directions/orientations to the tangible entity where said tag is arranged and can receive the outside light, respectively, wherein when predetermined radio waves are received from the reader, regarding the exchange of information with the reader, the wireless IC tag may perform no response to the reader depending upon a received light signal based upon the received light signal obtained by receiving the outside light by the outside light receiving means, or the tag information to be exchanged contains received light information according to the received light signal at least in a portion.

Further, the present invention may be a wireless IC tag that is attached to or is included in a tangible entity, and that can store information, and where electric power is supplied wirelessly, and that performs data communication with a reader existing outside the tangible entity, and that can exchange information stored in said tag or other tag information with the reader, comprising: a plurality of light transmission sections that transmit a light irradiated from a predetermined direction/orientation relative to the tangible entity where said tag is arranged into the inside of said tag, respectively, and one or more light receiving elements that receive the light transmitted through the light transmission sections, wherein the plurality of light transmission sections form a pattern where transmissivity of a light is not uniform but different from any other patterns in at least one direction relative to the direction where the light transmits through, respectively; and said tag receives a light, which has been transmitted through any one of the plurality of light transmission sections, and when predetermined radio waves are received from the reader, regarding the exchange of information wit the reader, the tag may perform no response to the reader depending upon a received light signal based upon the received light signal corresponding to the pattern formed by the light transmissivity, or the tag information to be exchanged contains received light information according to the received light signal at least in a portion.

The present invention may be a wireless IC tag that is attached to or is included in a tangible entity, and that can store information, and where electric power is supplied wirelessly, and that performs data communication with a reader existing outside the tangible entity, and that can exchange information stored in said tag or other tag information with the reader, comprising: an outside light reflecting means having surfaces where a reflectance to a light can be changed so as to form a pattern, which is not uniform in one-dimensional or two-dimensional direction, in a predetermined direction or orientation, respectively, wherein the wireless IC tag receives predetermined communication from the reader, and a predetermined pattern based upon the communicated information appears on a surface of the outside light reflecting means.

Further, the present invention may be a wireless IC tag reader that is attached to or is included in a tangible entity, and that can store information, and where electric power is supplied wirelessly, and that performs data communication with a wireless IC tag having a function to distinguish lights irradiated from a plurality of predetermined directions/orientations to the tangible entity and to receive the lights, and that can perform data communication via electromagnetic induction or radio waves, and that can exchange information stored in the wireless IC tag, received light information relating to the light reception of the lights or other tag information, with the wireless IC tag, comprising: a light irradiation direction identifying means that can extract received light information obtained by distinguishing lights irradiated from a plurality of predetermined directions/orientations to the tangible entity by the wireless IC tag and by receiving the lights; and that identifies the direction/orientation of the light irradiation to the tangible entity based upon the information, wherein the wireless IC tag reader performs data communication with the wireless IC tag via radio waves and exchanges information; identifies the direction/orientation of light irradiation to the tangible entity by the light irradiation direction identifying means based upon the received light information in the received tag information; and can specify a direction/orientation of posture of the tangible entity where the wireless IC tag is arranged.

Further, the present invention may be an information processor performing processing, such as reading an image on a medium surface, to a document using paper as a medium, wherein an irradiation region includes: an illumination means that irradiates a light to be moved or scanned relative to a constant direction on one surface of the medium as an illumination of image reading; an image reading section that optically reads an image on the medium surface using a light from the illumination means as an illumination light to the medium; a wireless IC tag reader that is attached to or is included in the medium, and that can store information, and where electric power is supplied wirelessly, and that performs data communication with a wireless IC tag having a function to distinguish lights irradiated from a plurality of predetermined directions/orientations to the tangible entity and to receive the lights, and that can perform data communication via electromagnetic induction or radio waves, and that can exchange information stored in the wireless IC tag, received light information relating to the light reception of the lights or other tag information with the wireless IC tag; and a light irradiation direction identifying means that can extract received light information obtained by distinguishing lights irradiated from a plurality of predetermined directions/orientations to the tangible entity by the wireless IC tag and by receiving the light; and that identifies the direction/orientation of the light irradiation to the tangible entity based upon the information; and the information processor exchanges information with the wireless IC tag by data communication via radio waves; identifies the direction/orientation of light irradiation to the tangible entity by the light irradiation direction identifying means based upon the received light information in the received tag information; and can specify a direction/orientation of posture of the tangible entity where the wireless IC tag.

Further, the present invention may an information processor processing, such as reading out an image on a medium surface, to a document using paper where a wireless IC tag is arranged as a medium having surfaces where a reflectance to a light can be changed so as to form patterns not uniform in one-dimensional or two-dimensional direction, wherein the information processor comprises and includes: an illumination means that irradiates a light to be moved or scanned relative to a constant direction on one surface of the medium as illumination for image reading; an image reading unit that optically reads an image on the medium surface using a light from the illumination means as an illumination light to the medium; a pattern recognition means that extracts a specific pattern from the image and recognizes information indicated by the pattern; and a wireless IC tag reader that is attached to or is included in the medium, and that can store information, and that can perform data communication with a wireless IC tag where electric power is supplied via radio waves, and that can exchange information stored in the wireless IC tag or other tag information with the wireless IC tag, wherein after the wireless IC tag reader communicates with the wireless IC tag to instruct to form a predetermined pattern where a reflectance to a light is not uniform in one-dimensional or two-dimensional direction, when the pattern recognition means extracts said predetermined pattern and can recognize the information indicated by the pattern, the tag information is exchanged with the wireless IC tag based upon said recognized information.

Further, the present invention may be an information processor processing, such as printing output of an image to a medium, such as paper, comprising: a medium conveyance means that conveys the medium and sends the medium out of the apparatus; a wireless IC tag reader that is attached to or is included in the medium, and that can store information, and where electric power is supplied wirelessly, and that performs data communication with a wireless IC tag having a function to distinguish lights irradiated from a plurality of predetermined directions/orientations to the tangible entity and to receive the lights, and that can perform data communication via electromagnetic induction or radio waves, and that can exchange information stored in the wireless IC tag, received light information relating to the light reception of the light or other tag information with the wireless IC tag; and a light irradiation means that irradiates a light to a surface of printing onto the medium; wherein when printing output, when the medium conveyance means is conveying the medium, the light irradiation means irradiates a light, and at least in information stored in the wireless IC tag in the tag information is exchanged based upon the irradiation.

In the present invention, when a predetermined radio waves are received from a reader, regarding the information exchange with the reader, based upon a received light signal obtained via receiving an outside light, the tag may not respond to the reader depending upon the received light signal, or tag information to be exchanged contains received light information according to the received light signal at least in a portion, and even if the number of the wireless IC tags is one, the tag information can vary according to the direction/orientation of the irradiated light by the number of directions/orientations of irradiated light to be the outside light to a tangible entity (for example, document sheet, such as printed paper) where the tag is arranged.

Then, if the direction/orientation of the illumination is predetermined one, the tag information can vary per direction/orientation where the tangible entity is placed (for example, per surface of back and front of a document sheet) by the number of directions where the output light can be received, according to the direction/orientation of the tangible entity (for example, a document sheet) where the tag is arranged. Therefore, the reader can simultaneously detect the presence of the document sheet; concurrently, can obtain the direction/orientation (for example, orientation where the front or back surface of the document sheet faces) where the document sheet is placed by setting the irradiation direction/orientation to the predetermined ones.

Further, in this wireless IC tag, even in the case of a document where, for example, a plurality of document sheets where the wireless IC tags are arranged, respectively, are bound, when the document is copied, it can be designed such that only the tag of the document sheet that faces the platen irradiated by an illumination light for reading the document reacts the illumination light and responds to the reader, but tags of other document sheets not under the predetermined illumination condition will not respond to the reader, so data will not collide among a plurality of tags that have received radio waves, and it becomes possible to detect only the tag under a predetermined illumination condition, and a user/operator who conducts the copying can place a bundle of documents as is without separating a sheet when copying.

Further, in a plurality of light transmission sections, the transmissivity of light is not uniform at least in one direction relative to the direction where the light transmits, and it forms a different pattern from any other patterns, respectively, and said tag receives a light, which has passed any of a plurality of light transmission sections by a light receiving element, and when predetermined radio waves are received from the reader, regarding the information exchange with the reader, based upon the received light signal corresponding to the pattern formed by the transmissivity of light, the tag may not respond to the reader depending upon the received light signal, or tag information to be exchanged contains received light information according to the received light signal at least in a portion, and when a light illuminates a tangible entity (for example, a document sheet) with the tag attached while moving with the time, the wireless IC tag can vary a temporal change of received light state by the light receiving element according to the pattern of the light transmissivity in each light transmission section; therefore, even if the number of the light receiving element is one, the direction/orientation of light irradiation can be distinguished according to the temporal change of the light receiving state.

Then, in a digital multifunction apparatus, when copying a document, since a light is illuminated while the illumination moves relative to a document sheet where an image on the space is read by a scanner in general, the wireless IC tag arranged in the document sheet can distinguish whether the surface of the document faces up or down with regard to the reading by a scanner due to difference in the temporal change of the received light condition by the light receiving element, and the information relating to the distinction can be transmitted to the reader; in the meantime, the reader can detect whether or not there is a document sheet; concurrently, if the irradiation direction/orientation are pre-set to predetermined ones, the wireless IC tag can simultaneously detect the direction/orientation where the document sheet is placed (for example, the orientation where a front surface or a back surface is facing), as well.

Further, if the wireless IC tag is equipped with an outside light reflecting means having surfaces in predetermined directions/orientations that can be changed so as to form a pattern where a reflectance to a light is not uniform in one-dimensional or two-dimensional direction, information can be transmitted to other by data transmission via electromagnetic induction or radio waves; in addition, since a light reflected by a surface can also be transmitted by a pattern formed by a difference in reflectance at section on said surface, the wireless IC tag where tag information can be exchanged only when a light is irradiated or a light is received can be realized.

Further, since information can be exchanged with the wireless IC tag by data communication via radio waves and directions/orientation of irradiation of a light to a tangible entity is identified based upon received light information in the received tag information and direction/orientation of a posture of the tangible entity where the tag is arranged can be specified, the reader can detect whether the tag is arranged on a front surface or a back surface of, for example, paper, a film or other document medium, and can detect a surface of a document sheet that is situated on the top of the bundle when the document is used in a form where a plurality of document sheets are bound.

Further, if information is exchanged with the wireless IC tag by data communication via radio waves and irradiation direction/orientation of illumination light to a medium is identified by a light irradiation direction identifying means based upon received information in the received tag information and the direction/orientation of a posture of a medium where the tag is arranged, the information processor, such as a digital multifunction apparatus, can detect whether the surface faces up or down regarding, for example, paper, a film or other document medium where the tag is arranged, and can detect a surface of the document sheet situated on the top surface of the bundle when a document is used in a form when a plurality of document sheets are bound.

Further, after the wireless IC tag reader performs the communication with the wireless IC tag to instruct to form a predetermined pattern where a reflectance to a light is not uniform in one-dimensional or two-dimensional direction, when the pattern recognition means extracts said predetermined pattern and can recognize the information indicated by the pattern, if the tag information is exchanged with the wireless IC tag based upon the recognized information, the information from the wireless IC tag can be obtained by the data communication via electromagnetic induction or radio waves and can be obtained by the pattern of the wireless IC tag, as well; therefore, the tag information can be exchanged only when a light is irradiated or a light is received.

At the print output, the light irradiation means irradiates the light while the medium conveyance means is conveying the medium, and at least in information stored in the wireless IC tag in the tag information is exchanged based upon the irradiation, so that the information processor, such as a printer, can irradiate a light that enable to distinguish the received light state according to the pattern to the tag having patterns whose transmissivity of light is different from each other, and can exchange the tag information including the received light information according to the received light signal in the tag that has received the irradiated light by writing or reading into/from the tag.

As described above, the present invention proves effective to provide the wireless IC tag that can manage considerably much data compared to barcodes as a means that can detect whether the surface of a substance is front or back; and that can transmit information about a surface of a document sheet situated on the top of a bundle even when it is used in a format where a plurality of print sheets are piled.

### Brief Description of the Drawings

Fig. 1 shows pattern diagrams of a document sheet where a wireless IC tag relating to the present invention is buried, and Fig. 1A shows the upper surface and Fig. 1B shows an enlargement of the cross sectional view at the line A1.
Fig. 2 shows patterns of the wireless IC tag relating to Embodiment 1, and Fig. 2A is a top view, Fig. 2B is a cross sectional view at the line A2 and Fig. 2C is a bottom view.
Fig. 3 is a block diagram showing a configuration of the circuit block of the wireless IC tag relating to Embodiment 1.
Fig. 4 is a circuit configuration diagram of a memory switching circuit 15 and a memory 14 in the wireless IC tag relating to Embodiment 1.
Fig. 5 shows schematic configuration of the digital multifunction apparatus in this embodiment.
Fig. 6 shows one example of state where a document sheet is placed on the platen of the digital multifunction apparatus.
Fig. 7 shows one example of schematic configuration of information processing circuit in the digital multifunction apparatus.
Fig. 8 is a command sequence diagram between the wireless IC tag and the digital multifunction apparatus relating to operations of the tag in this embodiment.
Fig. 9 shows patterns of the wireless IC tag relating to Embodiment 2, and Fig. 9A is a top view, Fig. 9B is a cross sectional view at the line A2 and Fig. 9C is a bottom view.
Fig. 10 is a block diagram showing a configuration of the circuit block of the wireless IC tag relating to Embodiment 2.
Fig. 11 is an enlarged pattern diagram showing a cross section in the situation where a document sheet where the tag relating to Embodiment 2 is buried is placed on the platen of a digital multifunction apparatus.
Fig. 12 is a pattern diagram showing a temporal change associated with the illumination scanning regarding the amount of light received of the wireless IC tag relating to Embodiment 2.
Fig. 13 is a processing flowchart of a light irradiation direction recognition function of the wireless IC tag relating to Embodiment 2.
Fig. 14 shows patterns of another example of the tag relating to Embodiment 2, and Fig. 14A is a top view, Fig. 14B is a cross sectional view at the line A2 and Fig. 14C is a bottom view.
Fig. 15 further shows patterns of another tag example, and Fig. 15A is a top view and Fig. 15B is a bottom view.

### Detailed Description of the Preferred Embodiments

A first aspect in accordance with the present invention is wireless IC tag that is attached to a tangible entity or is arranged by being included in a portion, where information can be stored and electric power is supplied, and that performs data communication with a reader existing outside the tangible entity via electromagnetic induction or radio waves, and can exchange tag information with the reader by data communication. Herein, the tag information indicates information stored in the tag and other information. Other information means, for example, information generated by said tag. This wireless IC tag is arranged, for example, in a document sheet, such as printer paper, or other tangible entity. When this wireless IC tag is a so-called IC card, the wireless IC tag can be arranged in a plastic card, which is a body of the card. This wireless IC tag comprises an outside light receiving means that distinguishes an outside light in a plurality of directions/orientations to the tangible entity where said tag is arranged and can receive the outside light, respectively. When the tag is arranged, for example, in a document sheet, the outside light receiving means distinguishes outside lights in predetermined directions within the surface of the document sheet or in predetermined direction relative to the surface, and receives lights. Then, when this wireless IC tag receives predetermined radio waves from the reader, regarding the exchange of information with the reader, the wireless IC tag may perform no response to the reader depending upon a received light signal based upon the received light signal obtained by receiving the outside light by the outside light receiving means, or the tag information to be exchanged contains received light information according to the received light signal at least in a portion.

Because of this configuration, when this wireless IC tag receives predetermined radio waves from the reader, regarding the exchange of information with the reader, if the wireless IC tag may perform no response to the reader depending upon a received light signal based upon the received light signal obtained by receiving the outside light by the outside light receiving means, or the tag information to be exchanged contains received light information according to the received light signal at least in a portion, and the wireless IC tag 1 can vary tag information by the number of directions/orientations to enable to receive the outside light by changing the direction/orientation of the illumination light, which will be the outside light to a tangible entity where the tag is arranged, even if the number of the tags is one.

Then, if the direction/orientation of the illumination is set to a predetermined one, the tag information can be different per direction/orientation where the tangible entity is placed (for example, per surface of back or front of the document sheet) by the number of directions to be able to receive the outside light. For example, different tag information according to the direction/orientation where the tangible entity is placed can be transmitted by the tag. Therefore, the reader can detect the presence of a document sheet; concurrently, can simultaneously acquire the direction/orientation (for example, orientation of the front surface or the back surface of the document sheet) where the document sheet is placed by setting the irradiation direction/orientation at the predetermined one.

Further, even in the case of a document where a plurality of document sheets, where this wireless IC tag is arranged, respectively, are bound, when the document is copied, it can be designed such that only the tag of the document sheet facing the platen where the light for reading the document is illuminated reacts to said illumination light and responds to the reader, and tags arranged in the other document sheets not under the predetermined illumination condition, data shall not collide among the plurality of tags that have received radio wave, and it is possible to detect only the tag under the predetermined illumination condition, and a user/operator who conducts copying can place a bundle of document sheets without separating the document one by one when copying.

As described above, the wireless IC tag can detect front and back of a substance, and even when it is used in a form where a plurality of print sheets are piled, information situated on the top surface of the bundle can be transmitted.

A second aspect in accordance with the present invention is the wireless IC tag according to the first aspect, wherein the outside light receiving means are a plurality of light receiving elements, which are orientated toward predetermined direction/orientation, respectively.

Due to this configuration, because the outside light receiving means are a plurality of light receiving elements that are orientated toward predetermined direction/orientation, respectively, each direction/orientation is distinguished and the outside light in said direction/orientation can be simply detected.

A third aspect in accordance with the present invention is the wireless IC tag according to the first aspect, wherein the outside light receiving means comprises: a plurality of light transmission sections, which transmit a light irradiated from the predetermined direction/orientation into the inside of the tag, respectively, and a plurality of light receiving elements, which correspond to one of the light transmission sections, respectively, and receive the light transmitted through the corresponding light transmission sections.

Due to this configuration, the outside light receiving means is composed of a plurality of light transmission sections that transmit lights irradiated from predetermined direction/orientation through the inside of the tag, and a plurality of light receiving elements that correspond to the light transmission sections and receive the lights that have transmitted through the corresponding light transmission sections, respectively, and the outside light can be guided to the light receiving element using a light guiding means, such as an optical finer to guide a light by an appropriate pathway, for the light transmission sections; therefore, the light receiving elements can be configured in any direction/orientation in a tag. Further, it can be structured such that the position where the outside light is received and retrieved can be set away from another group of other components.

A forth aspect in accordance with the present invention is a wireless IC tag that is attached to or is included in a tangible entity, and that can store information, and where electric power is supplied wirelessly, and that performs data communication with a reader existing outside the tangible entity, and that can exchange information stored in said tag or other tag information with the reader, comprising: a plurality of light transmission sections and one or more light receiving elements. In this wireless IC tag, each of the plurality of light transmission sections transmits a light irradiated from predetermined direction/orientation to the tangible entity where said tag is arranged through the inside of said tag, and one or more light receiving elements receive the light that has transmitted through the light transmission sections, respectively. Herein, in each light transmission section, transmissivity of a light is not uniform at least in one direction relative to the direction the light is transmitted through, and forms a pattern, which is different from any other pattern, and said tag receives the light, which has been transmitted through any of the plurality of the light transmission sections by the light receiving element. When receiving predetermined radios from the reader, regarding the exchange of information with the reader, this wireless IC tag may not respond to the reader according to the received light signal based upon the received light signal corresponding to the pattern formed by the transmissivity of a light, or the tag information to be exchanged contains the received light information according to the received light signal at least in a portion.

Due to this configuration, in a plurality of light transmission sections, the transmissivity of light is not uniform at least in one direction relative to the direction where the light transmits, and it forms a different pattern from any other patterns, respectively, and said tag receives a light, which has passed any of a plurality of light transmission sections by a light receiving element, and when predetermined radio waves are received from the reader, regarding the information exchange with the reader, based upon the received light signal corresponding to the pattern formed by the transmissivity of light, the tag may not respond to the reader depending upon the received light signal, or tag information to be exchanged contains received light information according to the received light signal at least in a portion, and when a light illuminates a tangible entity (for example, a document sheet) with the tag attached while moving with the time, the wireless IC tag can vary a temporal change of received light state by the light receiving element according to the pattern of the light transmissivity in each light transmission section; therefore, even if the number of the light receiving element is one, the direction/orientation of light irradiation can be distinguished according to the temporal change of the light receiving state.

Then, in a digital multifunction apparatus, when copying a document, since a light is illuminated while the illumination moves relative to a document sheet where an image on the space is read by a scanner in general, the wireless IC tag arranged in the document sheet can distinguish whether the surface of the document faces up or down with regard to the reading by a scanner due to difference in the temporal change of the received light condition by the light receiving element, and the information relating to the distinction can be transmitted to the reader; in the meantime, the reader can detect whether or not there is a document sheet; concurrently, if the irradiation direction/orientation are pre-set to predetermined ones, the wireless IC tag can simultaneously detect the direction/orientation where the document sheet is placed (for example, the orientation where a front surface or a back surface is facing), as well.

Further, in this wireless IC tag, even in the case of a document where, for example, a plurality of document sheets where the wireless IC tags are arranged, respectively, are bound, when the document is copied, it can be designed such that only the tag of the document sheet that faces the platen irradiated by an illumination light for reading the document reacts the illumination light and responds to the reader, but tags of other document sheets not under the predetermined illumination condition will not respond to the reader, so data will not collide among a plurality of tags that have received radio waves, and it becomes possible to detect only the tag under a predetermined illumination condition, and a user/operator who conducts the copying can place a bundle of documents as is without separating a sheet when copying.

As described above, the wireless IC tag can detect front and back of a substance, and even when it is used in a form where a plurality of print sheets are piled, information situated on the top surface of the bundle can be transmitted.

A fifth aspect in accordance with the present invention is the wireless IC tag according to the fourth aspect, wherein in the light transmission section, transmissivity of a light forms the patterns in two directions at right angles to each other relative to the direction where the light transmits through.

Due to this configuration, if the transmissivity of light forms the pattern in two directions at right angles to each other relative to the direction of the light transmission in the light transmission section, the pattern is assumed the same one in these two direction, and when a light is irradiated to the tangible entity (for example, a document sheet) where the wireless IC tag is arranged is irradiated while moving along with the time, for example, since a temporal change of the received light state by the light receiving element can be designed to be the same regardless of the vertical and horizontal direction of the document sheet relative to the scanner reading, even if the document sheet is placed in any horizontal and vertical directions relative to the scanner reading, whether the document sheet faces up or down can be transmitted to the reader.

Further, if the patterns are differentiated between the two directions, whether the document sheet faces up or down relative to the scanner reading can be distinguished according to a temporal change of the received light state by the light receiving element.

In a sixth aspect in accordance with the present invention according to the fourth aspect, the patterns formed by the transmissivity of the light are axisymmetric relative to an axis that crosses the center between the one end side and the other end side in the direction of forming the patterns.

Due to this configuration, if the patterns formed by the transmissivity of the light are axisymmetric relative to an axis that crosses the center between the one end side and the other end side in the direction of forming the patterns, the pattern of a change in amounts of lights detected by the light receiving element of the reader becomes the same even in the direction opposite to the movement direction of a light irradiated by the wireless tag, and it becomes easier to determine the pattern by the reader. For example, in the case that the tag is attached to a print sheet, when the document sheet is placed on the platen of a digital multifunction apparatus, even if the placement orientation is any so-called vertical orientation, because the pattern of the change in an amount of light to be detected by the light receiving element of the reader is the same, it becomes easier to determine the pattern by the reader.

In a seventh aspect in accordance with the present invention according to the fourth aspect, regarding the patterns formed by the transmissivity of the light, the transmissivity of the light at the end in the direction formed by the pattern is the same with all of the plurality of transmission sections.

Due to this configuration, if the patterns formed by the light transmissivity at the ends in the direction formed by the pattern are the same in all of the plurality of light transmission sections, when determining which light transmission section the light has passed through, the wireless IC tag or the reader can acquire the magnitude of absolute value of a light irradiated to the tag (amount of illumination light, mounting form of the tag to a print sheet and other effects) by an amount of received light at the time of start of light reception, and any effects of the amount of illumination light, the mounting form of the tag to a print sheet and others can be eliminated, and the light transmission section based upon a response to the temporal change of the amount of received light by the light receiving element and the pattern can be stably determined.

A eighth aspect in accordance with the present invention is a wireless IC tag that is attached to or is included in a tangible entity, and that can store information, and where electric power is supplied wirelessly, and that performs data communication with a reader existing outside the tangible entity, and that can exchange information stored in said tag or other tag information with the reader. This wireless IC tag comprises an outside light reflecting means having surfaces where a reflectance to a light can be changed so as to form a pattern, which is not uniform in one-dimensional or two-dimensional direction, in a predetermined direction/orientation, respectively, and the wireless IC tag receives predetermined communication from the reader, and a predetermined pattern based upon the communicated information appears on a surface of the outside light reflecting means.

Due to this configuration, if the wireless IC tag comprises the outside light reflecting means having surfaces where a reflectance to a light can be changed so as to form a pattern, which is not uniform in one-dimensional or two-dimensional direction, in a predetermined direction/orientation, information can be transmitted to other by the data communication via electromagnetic induction or radio waves, and in addition, the information can be transmitted by a pattern formed by a difference in the reflectance of the light reflected by a surface in each section on the surface, the tag information can be exchanged only when the light is irradiated or only when a light is received.

A ninth aspect in accordance with the present invention is the wireless IC tag according to the eighth aspect, comprising a plurality of the outside light reflecting means, wherein surfaces where patterns are formed face against a predetermined direction/orientation, respectively, or one of the plurality of the outside light reflecting means has a plurality of the surfaces, and each surface faces a predetermined direction/orientation.

Due to this configuration, because the wireless IC tag comprises the outside light reflecting means and surfaces where patterns are formed face against predetermined direction/orientation, respectively, or one of the plurality of the outside light reflecting means has a plurality of the surfaces, and each surface faces against a predetermined direction/orientation, information can be transmitted by the pattern that has distinguished each direction/orientation.

A tenth aspect in accordance with the present invention is the wireless IC tag according the eighth aspect, wherein in the surface where the pattern is formed, the pattern where a reflectance to a light is not uniform in one-dimensional or two-dimensional direction is made from liquid crystal.

Due to this configuration, in the surfaces where patterns are formed, since the pattern where a reflectance to a light is not uniform in one-dimensional or two-dimensional direction is made from liquid crystal, the pattern formed by the liquid crystal can be electrically changed, thus the pattern can be arbitrarily and easily changed with an instruction from the outside.

An eleventh aspect in accordance with the present invention is the wireless IC tag according to the eighth aspect, wherein the pattern formed by the outside light reflecting means is a one-dimensional or two-dimensional barcode pattern.

Due to this configuration, if the pattern formed by the outside light reflecting means is one-dimensional or two-dimensional barcodes, a pattern where the reflectance to a light is not uniform in one-dimensional direction or two-dimensional direction can be easily formed, and if the barcode pattern is formed in accordance with predetermined specifications, the wireless IC tag can be utilized in other system where said specifications are adopted.

A twelfth aspect in accordance with the present invention is the wireless IC tag according to the first or fourth aspect, wherein the plurality of predetermined directions/orientations are directions where the front surface and the back surface of the tangible entity face.

Due to this configuration, because the plurality of directions/orientations are directions where the front surface and the back surface of the tangible entity face, the wireless IC tag can be easily arranged to a this sheet substance, such as a print sheet or document sheet, and the tag can distinguish whether the placement of the substance faces up or down.

A thirteenth aspect in accordance with the present invention is the wireless IC tag according to the first, fourth or ninth aspect, wherein the received light information is received light signal information indicating a content of the received light signal itself, or contains the received light signal information.

Due to this configuration, if the received light information is received light signal information indicating a content of the received light signal itself or contains the received light signal information, even in this case, because the received light signal information is processed by the wireless IC tag reader and desired information can be obtained, the increase of the scale of information processing in the tag is prevented and the production cost increase of the tag is kept low; concurrently, the function can be expanded.

A fourteenth aspect in accordance with the present invention is the wireless IC tag according to the first or forth aspect, comprising: a light receiving element that receives a light and generates voltage or an electric current, and a capacitor means that stores electric charges, wherein an electric power obtained by the light receiving element is stored in the capacitor means, and the electric power is used as a portion of electric power for an electric circuit of said tag.

Due to this configuration, if electric power obtained by the light receiving element is stored in the capacitor means and the electric power is used as a portion of electric power for an electric circuit of said tag, in the reading by the reader in the form where many tags that are situated close to each other exist, even if sufficient power to operate IC cannot be received due to the effect of mutual inductance between antennas incorporated in the tag, the electric power can be supplied to the circuit within the tag and IC can be operated, and more sufficient electric power can be obtained compared to the case relying upon the radio waves, and even there is no radio wave, the electric power can be stored by the outside light, thus the electric power capacity of the tag is capable to stabilize the electric circuit operation and enables the handling of processing that requires time, and further expansion of the circuit function can become easy.

A fifteenth aspect in accordance with the present invention is paper, a film or other document medium where the wireless IC tag according to each of the first to the fourteenth embodiments is arranged.

Due to this configuration, if the wireless IC tag shown in each of the first to fourteenth embodiments is arranged, it becomes possible to detect whether the medium faces up or down and to detect a surface of document sheet situated on the top of a bundle when the document to be used is the bundle of document sheets, by the reader according to the direction/orientation of light irradiation to the tag. Then, even in the case of the document where a plurality of document sheets are bundled, when one surface of the document sheets is copied, only the tag in the document sheet facing against the platen where a light is irradiated can be operated, a user can place the document as the bundle of the document sheets without separating one by one.

As described above, the present invention can provide a document sheet that can maintain considerably much data compared to barcodes, and that can be transmitted via radio waves, and where whether the document sheet faces up or down can be detected, and where even if it is used as a bundle where a plurality of sheets are bundled, information of a surface situated on the top of the bundle can be transmitted.

A sixteenth aspect in accordance with the present invention is a wireless IC tag reader that is attached to or is included in a tangible entity, and that can store information, and where electric power is supplied wirelessly, and that performs data communication with a wireless IC tag having a function to distinguish lights irradiated from a plurality of predetermined directions/orientations to the tangible entity and to receive the lights, and that can perform data communication via electromagnetic induction or radio waves, and that can exchange information stored in the wireless IC tag, received light information relating to the light reception of the lights or other tag information, with the wireless IC tag, comprising: a light irradiation direction identifying means that can extract received light information obtained by distinguishing lights irradiated from a plurality of predetermined directions/orientations to the tangible entity by the wireless IC tag and by receiving the lights; and that identifies the direction/orientation of the light irradiation to the tangible entity based upon the information, wherein the wireless IC tag reader performs data communication with the wireless IC tag via radio waves and exchanges information; identifies the direction/orientation of light irradiation to the tangible entity by the light irradiation direction identifying means based upon the received light information in the received tag information; and can specify a direction/orientation of posture of the tangible entity where the wireless IC tag is arranged.

Due to this configuration, because this wireless IC tag reader can exchange information with the wireless IC tag by the data communication via radio waves, can identify the direction/orientation of the light irradiation to the tangible entity based upon the received light information in the received tag information, and can specify a direction/orientation of posture of the tangible entity where the wireless IC tag is arranged, the reader can detect whether paper, film or other document medium where the tag is arranged faces up or down, and can detect a surface situated on the top surface of a bundle when this is used in the form where a plurality of documents are bundled.

A seventeenth aspect in accordance with the present invention is the wireless IC tag reader according to the sixteenth aspect, wherein an irradiation region includes a light irradiation means that irradiates a light, which is moved or scanned relative to a constant direction on one surface of the tangible entity.

Due to this configuration, since an irradiation region irradiates a light, which is moved or scanned relative to a constant direction on one surface of the tangible entity, the reader can irradiate a light that enables to distinguish the received light states according to the pattern, to the tag having patterns whose transmissivity of light is different from each other in a plurality of directions/orientations, and the reader can exchange tag information including received light information according to the received light signal in the tag that has received the irradiated light with the tag.

A eighteenth aspect in accordance with the invention is an information processor performing processing, such as reading an image on a medium surface, to a document using paper as a medium. In the information processor, an irradiation region includes an illumination means that irradiates a light to be moved or scanned relative to a constant direction on one surface of the medium as an illumination of image reading; an image reading section that optically reads an image on the medium surface using a light from the illumination means as an illumination light to the medium; a wireless IC tag reader that is attached to or is included in the medium, and that can store information, and where electric power is supplied wirelessly, and that performs data communication with a wireless IC tag having a function to distinguish lights irradiated from a plurality of predetermined directions/orientations to the tangible entity and to receive the lights, and that can perform data communication via electromagnetic induction or radio waves, and that can exchange information stored in the wireless IC tag, received light information relating to the light reception of the lights or other tag information with the wireless IC tag; and a light irradiation direction identifying means that can extract received light information obtained by distinguishing lights irradiated from a plurality of predetermined directions/orientations to the tangible entity by the wireless IC tag and by receiving the light; and that identifies the direction/orientation of the light irradiation to the tangible entity based upon the information; and the information processor exchanges information with the wireless IC tag by data communication via radio waves; identifies the direction/orientation of light irradiation to the tangible entity by the light irradiation direction identifying means based upon the received light information in the received tag information; and can specify a direction/orientation of posture of the tangible entity where the wireless IC tag.

Due to this configuration, since the information processor can exchange information with the wireless IC tag by the data communication via radio waves, identify the direction/orientation of the light irradiation to the medium based upon the received light information in the received tag information; and specify a direction/orientation of posture of the tangible entity where the wireless IC tag, the information processor, such as a digital multifunction apparatus, can detect whether paper, a film or other document medium where the tag is arranged faces up or down, and detect a surface of the document sheet situated on the top of a bundle when a document where a plurality of document sheets are bundled is used.

A nineteenth aspect in accordance with the present invention is an information processor processing, such as reading out an image on a medium surface, to a document using paper where a wireless IC tag is arranged as a medium having surfaces where a reflectance to a light can be changed so as to form patterns not uniform in one-dimensional or two-dimensional direction. This information processor comprises and includes: an illumination means that irradiates a light to be moved or scanned relative to a constant direction on one surface of the medium as illumination for image reading; an image reading unit that optically reads an image on the medium surface using a light from the illumination means as an illumination light to the medium; a pattern recognition means that extracts a specific pattern from the image and recognizes information indicated by the pattern; and a wireless IC tag reader that is attached to or is included in the medium, and that can store information, and that can perform data communication with a wireless IC tag where electric power is supplied via radio waves, and that can exchange information stored in the wireless IC tag or other tag information with the wireless IC tag, wherein after the wireless IC tag reader communicates with the wireless IC tag to instruct to form a predetermined pattern where a reflectance to a light is not uniform in one-dimensional or two-dimensional direction, when the pattern recognition means extracts said predetermined pattern and can recognize the information indicated by the pattern, the tag information is exchanged with the wireless IC tag based upon said recognized information.

Due to this configuration, after the wireless IC tag reader communicates with the wireless IC tag to instruct to form a predetermined pattern where a reflectance to a light is not uniform in one-dimensional or two-dimensional direction, when the pattern recognition means extracts said predetermined pattern and can recognize the information indicated by the pattern, the tag information is exchanged with the wireless IC tag based upon said recognized information, thus the information processor can select a wireless IC tag that responds to its own instruction, and can obtain the information from the tag by the data communication via electromagnetic induction or radio waves, in addition to by the pattern of the wireless IC tag.

A twentieth aspect in accordance with the present invention is an information processor processing, such as printing output of an image to a medium, such as paper, comprising: a medium conveyance means that conveys the medium and sends the medium out of the apparatus; a wireless IC tag reader that is attached to or is included in the medium, and that can store information, and where electric power is supplied wirelessly, and that performs data communication with a wireless IC tag having a function to distinguish lights irradiated from a plurality of predetermined directions/orientations to the tangible entity and to receive the lights, and that can perform data communication via electromagnetic induction or radio waves, and that can exchange information stored in the wireless IC tag, received light information relating to the light reception of the light or other tag information with the wireless IC tag; and a light irradiation means that irradiates a light to a surface of printing onto the medium; wherein when printing output, when the medium conveyance means is conveying the medium, the light irradiation means irradiates a light, and at least in information stored in the wireless IC tag in the tag information is exchanged based upon the irradiation.

Due to this configuration, when printing output, when the medium conveyance means is conveying the medium, since the light irradiation means irradiates a light, and at least in information stored in the wireless IC tag in the tag information is exchanged based upon the irradiation, the information processor, such as a printer, can irradiate a light that enable to distinguish the received light state according to the pattern to the tag having patterns whose transmissivity of light is different from each other, and can exchange the tag information including the received light information according to the received light signal in the tag that has received the irradiated light by writing or reading into/from the tag.

A twenty-first aspect in accordance with the present invention is the information processor according to the twentieth aspect, wherein in the processing of the printing output of information containing confidential information or related to the confidential information, the information itself regarding the confidential information, or information for accessing to said confidential information is stored in the wireless IC tag, and information excluding any information relating to confidential is printed onto the medium, such as paper, as an image.

Due to this configuration, regarding the confidential information, the information itself or information for access to the confidential information (for example, network addresses or passwords when the confidential information is situated in the site on the network) is stored in the wireless IC tag, and information excluding data relating to confidential is printed as an image onto the medium, such as paper, thus as an image that is visualable to anybody, limited to information where confidential information is removed, printed materials where confidential information is stored in the tag having a security function, and that that can be distributed can be prepared.

For example, when the printed material where the tag is arranged is copied by a copier that does not have a reader, or when the printed material was copied without knowing a password to confidential information, the confidential information stored in the tag will never be visually imaged, but only a visualable image similar to general copying is copied. In the meantime, a person who knows the password to the confidential information can copy the confidential information as visually-imaged one by overlapping onto the visualable image or can print only the confidential information as separate paper.
At this time, the function relating to the authority can be variously differentiated according to the authority level to the confidential information in the password.

Then, regarding these printed matters, if different securities are applied to front and back surfaces (for example, network addresses, passwords or others are different), respectively, confidential information is linked to images printed on the front or back surfaces, and the information can be disclosed to only specific persons.

### EMBODIMENTS

Hereafter, each embodiment of the present invention will be described with reference to drawings.

### Embodiment 1

In this embodiment, an example where the wireless IC tag relating to the present invention (simply referred to as this tag in this embodiment), which can perform data communication with a reader via radio waves, and where light receiving elements are arranged both in the back and front surfaces, respectively, is buried into a recording medium (document sheet), such as a print sheet, printed paper or other document paper, will be described.

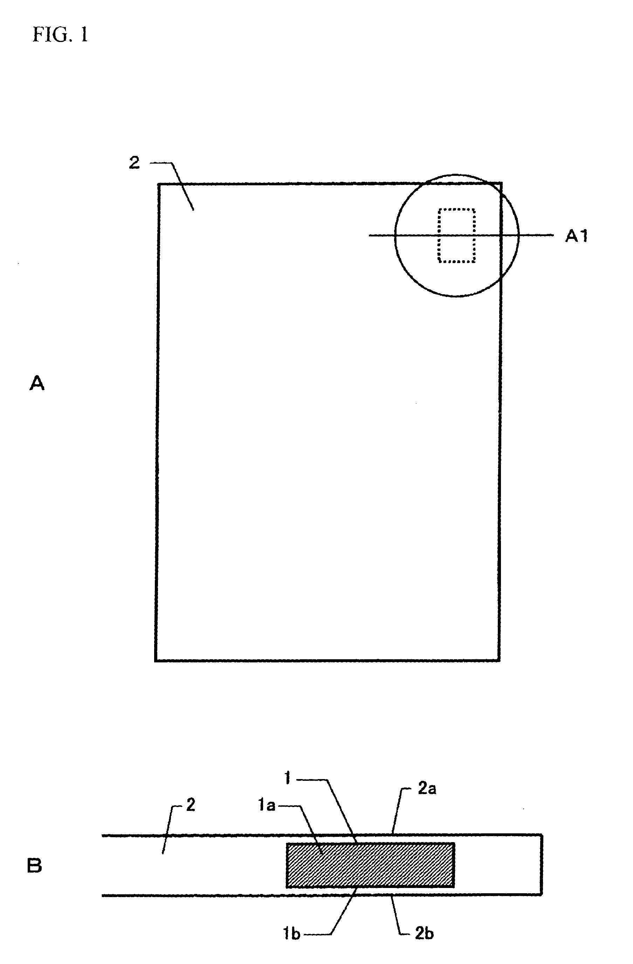

Fig. 1 shows pattern diagrams of the document sheet where this tag is buried, and Fig. 1A shows a top view and Fig. 1B shows an enlarged cross section at the line A1 in Fig. 1A.

In Fig. 1, the wireless IC tag 1 is buried into paper thickness of a document sheet 2. Herein, because the tag 1 is buried into the document sheet 2, the thickness of the paper at a portion 2a facing against the front surface 1a or a back surface 1b of the tag 1 is thinner, and the outside light into the document sheet 2 can transmit through the tag 1 via the portion 2a.

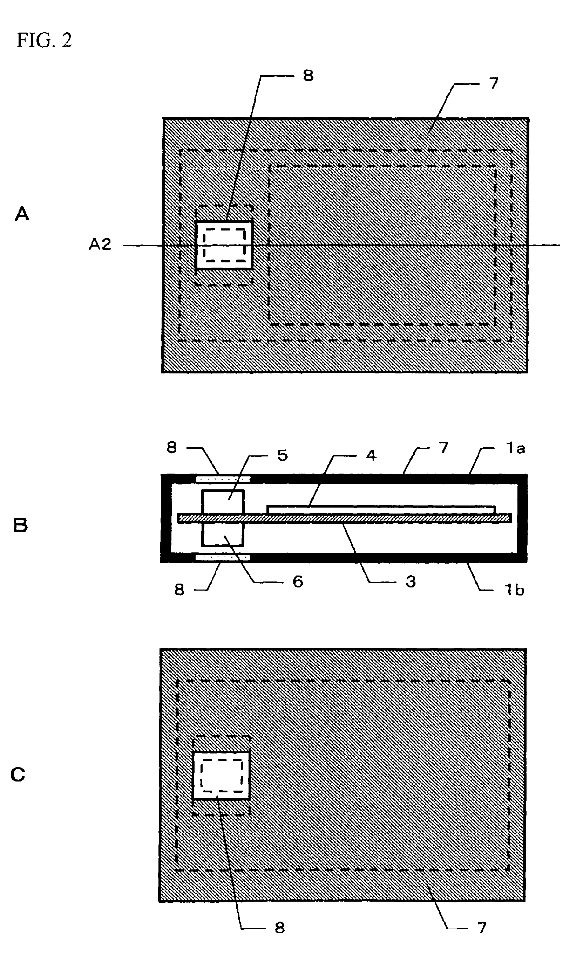

Fig. 2 shows pattern diagrams of the wireless IC tag 1, and Fig. 2A is a top view, Fig. 2B is a cross sectional view at the line A2 in Fig. 2A and Fig. 2C is a bottom view.

In Fig. 2, a circuit element group 4 comprising the wireless IC tag 1 is mounted onto a circuit substrate 3.

A light receiving element 5 is an element whose light receiving section is mounted onto the front surface side of the circuit substrate 3 by facing against the front surface 1a of the wireless IC tag 1 (referred to as a tag front surface), and which receives the outside light to the tag front surface 1a. In the meantime, another light receiving element 6 is an element whose light receiving section is mounted onto the back surface side of the circuit substrate 3 by facing against the back surface 1b of the wireless IC tag 1 (referred to as a tag back surface), and which receives the outside light to the tag back surface 1b. A photodiode is used for the light receiving elements in this embodiment. Since the circuit substrate 3 of the wireless IC tag 1 buried into the document sheet 2 is substantially in parallel to the document sheet 2, the light receiving section of the light receiving element 5 shall face against one surface of the document sheet 2, and the light receiving section of the light receiving element 6 shall face against the other surface.

A tag cover 7 is a cover that maintains the circuit substrate 3 where the light receiving elements 5 and 6 and other circuit elements are mounted and included, and that uses a resin for blocking any effect of humidity from outside as a material, and the portions where the light receiving sections of the light receiving elements 5 and 6 forms a light transmitting window 8, which is formed to be clear and that can transmit a light from the outside of the document sheet 2 through, and any other portions are formed to be opaque where a light from the outside of the document sheet 2 will not transmit through the inside of the wireless IC tag 1. Furthermore, it may be configured such that the light receiving sections of the light receiving elements 5 and 6 do not face against each surface of the document sheet 2, but a transmission section where a light is transmitted through the inside of the wireless IC tag 1 from this light transmission window 8, and said light is guided to the light receiving sections of the light receiving elements 5 and 6 via this transmission section.

Fig. 3 is a block diagram showing a circuit block configuration of the wireless IC tag 1 comprising the light receiving elements 5 and 6 and the circuit element group 4.

In Fig. 3, an antenna 9 is arranged inside the document sheet 2 not shown in Fig. 1 in this embodiment, and is an antenna where the wireless IC tag 1 receives a supply of electric power from a wireless IC tag reader (including the one having a writing function, as well; simply referred to as a reader) existing the outside of the document sheet 2, and that is for data communication for exchanging information maintained in a memory described below, information relating to the control of the functions/operations and other tag information via radio waves.

A power supply generating circuit 10 rectifies and smoothes an electric current excited by the antenna 9 due to a carrier wave of received radio waves, and the electric power by the electric current is regarded as the electric power to the circuit of the wireless IC tag 1. Herein, the power supply generating circuit 10 has a condenser function to some degree, and because of the function, even after the radio waves are disconnected, the circuit of the tag I can be operated for a predetermined time or longer.

A demodulator circuit 11 is a circuit to demodulate a signal modulated to the carrier wave of the radio waves received by the antenna 9, and the demodulated signal is provided to a control circuit 12 described below.

In the meantime, a modulator circuit 13 modulates a radio carrier wave by a signal to be transmitted from the control circuit 12 to the reader, and provides the modulated ratio carrier wave to the antenna 9. Then, the modulated radio carrier wave is emitted to the outside via the antenna 9.

A memory 14 is a memory element where at least partial data of the tag information is maintained (in this embodiment, information that is stored in the memory 14, and that is in the condition to be read and written from the outside is referred to as memory information), and in this embodiment, the memory element is rewritable of maintained data, and the data is read and written by the control circuit 12. Furthermore, the memory information may include information indicating the condition of received light in the wireless IC tag 1 to be described below (referred to as received light information), and it is included in this embodiment.

The light receiving element (front) 5 is a light receiving element whose light receiving section is orientated toward the tag front surface 1a in Fig. 2, and provides a light irradiated to the tag front surface 1a from the outside of the tag 1 to the control circuit 12 as an electric signal. Further, the light receiving element (back) 6 is a light receiving element whose light receiving section is orientated toward the tag back surface 1b in Fig. 2, and provides a light irradiated to the tag back surface 1b from the outside of the tag 1 to the control circuit 12 as an electric signal.

The control circuit 12 uses the demodulator 11, the modulator 13, the memory 14 and the light receiving elements 5 and 6 as input and output, and processes input and output signals from/into them and controls the function and operation of the tag 1. In addition, the data communication with the reader with each other via radio waves by controlling the function and operation of the tag 1.

A memory switching circuit 15 in the control circuit 12 is to switch the memory information read from the memory 14 by the control circuit 12 according to the amounts of light received at the light receiving elements 5 and 6. This memory switching circuit 15 will be described in detail next.

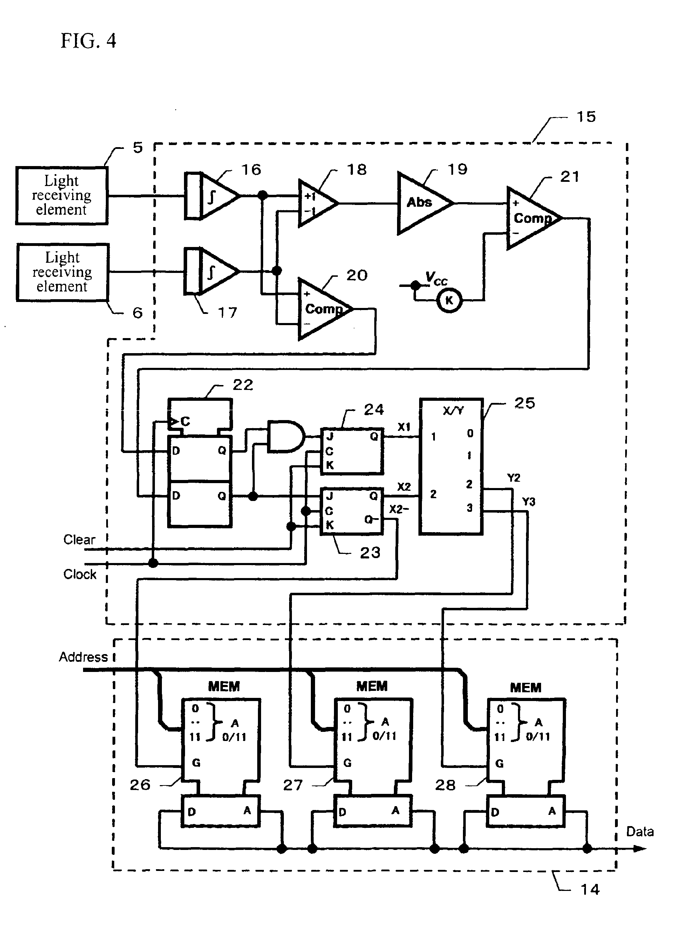

Fig. 4 shows the circuit configuration of the memory switching circuit 15 and the memory 14.

In Fig. 4, integrators 16 and 17 have a predetermined time constant (approximately 0.3 seconds) and are for integrating a signal according to the amounts of received lights at the light receiving element 5 or 6, respectively, and they filtrate a highfrequency component in the signal. With this function, a signal equivalent to the amount of received light at predetermined time average can be obtained.

A subtractor 18 subtracts an amount of received light of the tag back surface 1b obtained by the light receiving element (back) 6 and the integrator 17 from an amount of received light at the tag front surface 1a by the light receiving element (front) 5 and the integrator 16. Then, an absolute value computing unit 19 acquires an absolute value of the subtracting result.

A signal equivalent to the absolute value of a difference between the amount of received light at the tag front surface 1a and the amount of received light at the tag back surface 1b is obtained by the subtractor 18 and the absolute value computing unit 19 regardless of the amounts of the received lights.

A first comparator 20 compares voltage of an input analog signal and transmits a digital signal, and when the amount of the received light at the tag front surface 1a is greater than that at the tag back surface 1 b, an output digital signal is regarded as high voltage (it means high voltage of the digital circuit signal, and is also marked as "H"), and when the amount of the received light at the tag front surface 1a is greater than that at the tag back surface 1b, an output digital signal is regarded as low voltage (it means low voltage of the digital circuit signal, and is also marked as "L").

A second comparator 21 transmits high voltage ("H") of digital signal when the signal equivalent to the absolute value of the difference is predetermined voltage or greater. In other words, when the difference between the amount of the received light at the tag front surface 1a and the amount of the received light at the tag back surface 1b is a predetermined value (this value is referred to as a threshold value) or greater, the output digital signal becomes high voltage ("H").

A so-called clock signal (Clock), which is used throughout the entire control circuit 12 of this tag 1 and is a synchronization signal for a digital processing circuit, is entered into a C terminal of a D-type flip flop 22, and with this signal input, output signals of the first comparator 20 and the second comparator 21 are synthesized by this clock signal, respectively. Herein, the frequency of the clock signal (Clock) is set at 1 MHz in this embodiment; however, as long as the frequency is longer than a delay time of elements comprising the digital circuit, and, satisfies design specifications about the processing response speed of this tag 1, any frequency is acceptable.

A first J-K flip flop 23 clears its output Q to the low voltage ("L") by the high voltage ("H") of the clear signal (Clear) (described below) to be provided by another circuit within the control circuit 12, and then, when the output of the second comparator 21 becomes the high voltage ("H") once; in other words, when the difference between the amount of received light at the tag front surface 1a and the amount of received light at the tag back surface 1b becomes a predetermined value or greater, it is set to the high voltage ("H"). In other words, it is considered that the state of the high voltage "H" at an output signal X2 of the first J-K flip flop 23 indicates that this tag 1 receives a predetermined light either one of surfaces. Then, in this embodiment, for the purpose of convenience of the circuit connection, regarding the output X2 of the first J-K flip flop 23, a signal X2- whose signal logic (a state of high voltage or low voltage in the signal) is reversed shall be transmitted along with the output X2.

A second J-K flip flop 24 also clears its output Q by the clear signal (Clear) to be provided by another circuit within the control circuit 12. Then, after that, when and while the output of the second comparator 21 is high voltage ("H"), if the first comparator 20 is once high voltage ("H"); in other words, if the amount of the received light at the tag front surface 1a is greater than the amount of the received light at the tag back surface 1 b, the output is set to the high voltage ("H"). In other words, it is considered that the high voltage "H" at the output signal X1 of the second J-K flip flop 24 indicates that this tag 1 receives a predetermined light at the front surface 1a.

Herein, when the first J-K flip flop 23 and the second J-K flip flop 24 set the output state once, they remain and secure the output state regardless of the received light state of the light receiving elements 5 and 6 until the J-K flip flops are cleared next.

A decoder 25 regards a signal where the output X2 of the first J-K flip flop 23 and the output X1 of the second J-K flip flop 24 are put together as a 2-bit binary code, and decodes the code to four ways. In this embodiment, the output signal X2 of the first J-K flip flop 23 is regarded as a twos place digit of the binary digit and the output signal X1 of the second J-K flip flop 24 is regarded as ones place digit of the binary digit, they are entered into the decoder 25. Then, when X2 is high voltage ("H") and X1 is high voltage("H"), the output Y3 of the decoder 25 becomes high voltage ("H"), and when X2 is high voltage ("H") and X1 is low voltage("L"), the output Y2 becomes high voltage ("H")

Continuously, in Fig. 4, the memory 14 comprises three memory elements (26, 27 and 28) in this embodiment, and each of them has 4,096 bits (4k bits) of data memory capacity (therefore, memory information up to 4,096 bits can be stored) has 12 bits of address space, and the address (signal: Address) is commonly provided from the control circuit 12. In addition, these three memory elements (26, 27 and 28) are configured that only one of them are selected (so-called chip select) by the signals X2-, Y2 and Y3 from the memory switching circuit 15 and the data is transmitted (signal: Data), and the data can be read by the control circuit 12.

In other words, in the memory 14, the first memory element 26 is selected due to the high voltage ("H") of the signal X2-; the second memory element 27 is selected due to the high voltage of the signal Y2; and the third memory element 28 is selected due to the high voltage ("H") of the signal Y3.

As described, the memory 14 can store three types of memory information up to 4,096 bits, and the types are switched according to the signals X2-, Y2 and Y3 from the memory switching circuit 15. In this specification, when the memory information is distinguished by the types, the memory information stored in the first memory element 26 (first type) is referred to as first memory information; the memory information stored in the second memory element 27 (second type) is referred to as second memory information; and the memory information stored in the third memory element 28 (third type) is referred to as third memory information.

Table 1 shows the relationship between the amounts of received lights and the degree of the difference at the tag front surface 1a and the tag back surface 1b; the output signal X2 of the first J-K flip flop 23 (first J-K FF) and the output signal X1 of the second J-K flip flop 24 (second J-K FF); a selection states of the three memory elements (26, 27 and 28) comprising the memory 14; and a correspondence relationship with the received light information stored in each memory element.

**Table 1**

| Difference in the amounts of received lights | | J-K•FF(1) X2 | J-K•FF(2) X1 | Memory Element(MEM) | | |
|---|---|---|---|---|---|---|
| | | | | (26) | (27) | (28) |
| None/ Smaller | Greater at tag back surface | L | L | ○ | - | - |
| | Greater at tag front surface | H | L | ○ | - | - |
| None (Greater) | Greater at tag back surface | L | H | - | ○ | - |
| | Greater at tag front surface | H | H | - | - | ○ |
| | | Received light information | | [1] | [2] | [3] |

| | | | | | | |
|---|---|---|---|---|---|---|
| ○: Selected, -:Non-selected | | | | | | |

In Table 1, for example, when the output signal X2 of the first J-K FF is "H" (high voltage) and the output signal X1 of the second J-K FF is "H" (high voltage), this indicates that the difference in the amounts of received lights between the amount of received light at the tag front surface 1a and the amount of received light at the tag back surface 1b, and the amount of the received light at the tag front surface 1a is greater than that at the tag back surface 1b; in other words, when the tag 1 receives a predetermined amount of light at the front surface 1a, at this time, in the memory 14, the third memory element 28 is selected. Further, for example, when the output signal X2 of the first J-K FF is "L" (low voltage), this indicates that the difference between the amounts of received lights at the tag front surface 1a and the tag back surface 1b is small; in other words, when the tag 1 does not receive a predetermined amount of light as described later, it indicates that the first memory element 26 is selected in the memory 14.

Further, as received light information, the first memory element 26 stores 'received light information 1' (for example, a numerical value of '1'), the second memory element 27 stores 'received light information 2' (for example, a numerical value of '2') and the third memory element 28 stores 'received light information 3' (for example, a numerical value of '3') by including in a portion of the stored memory information, respectively.

Herein, the received light information is information indicating the state of a received light at the wireless IC tag 1, and 'received light information 1', 'received light information 2' and 'received light information 3' are data (values in this embodiment) that are different from each other according to each state of received light. Further, as described above, the memory switching circuit 15 transmits the signals X-, Y2 and Y3 according to the received light signals (output signals of the received light elements 5 and 6) generated by receiving a light by the wireless IC tag 1, and the memory 14 switches the types of the memory including the received light information by the signals X2-, Y2 and Y3 according to the received signals. Therefore, it is possible to specify and acquire the state of the received signal at the tag 1 according to the data of the received light information included in the memory information to be transmitted by the memory 14.

In Fig. 4 again, the control circuit 12 comprising the memory switching circuit 15 controls functions/operations of the wireless IC tag 1, and can perform the data communication with the reader via radio waves. Table 2 shows some information where the data communication is conducted (referred to as an inquiry command or simply referred to as a command), and shows a relationship of a response operation of the tag I to the command.

**Table 2**

| Command Name | Meaning | Response/[Received light information] | | |
|---|---|---|---|---|
| | | [1] | [2] | [3] |
| Tag detection command | Detecting wireless IC tag | - | ○ | ○ |
| Reading start command | Start of image reading | ○ | - | - |
| Light reception command | instruction of the light reception at tag | - | - | - |
| Reading completion command | Completion of image reading | - | ○ | ○ |

| | | | | |
|---|---|---|---|---|
| ○: Response, -: No-response | | | | |

In Table 2, for example, a tag detection command indicates an inquiry command including information for detection for the purpose of detecting that the wireless IC tag 1 has entered into a communicatable range by the reader.

Further, the response section indicates that the tag 1 responds to each command only when the received light information at the tag 1 is marked with ○ ('received light information 1', 'received light information 2' and 'received light information 1' in this embodiment). For example, even if the received information of the tag 1 is either one of 'received light information 1', 'received light information 2' or 'received light information 3'; in other words, the tag 1 responds to the reader regardless of the state of the received light signals, or with regard to the reading completion command, when the received light information is either 'received light information 2' or 'received light information 3', the tag 1 responds to the reader, and when the received light information is 'received light information 2', the tag will not respond to the reader.

As described above, when this wireless IC tag 1 receives radio waves from the reader, the response operation varies according to a command transmitted by the reader, received light information; i.e., the state of received light at the tag 1.

In the above-mentioned configuration, the operation of this wireless IC tag 1 will be described next.

Herein, as one example, an example where a digital multifunction apparatus that has a reader built-in, that reads an image on the paper of the document sheet 2 and sets as a manuscript, and that prints the manuscript onto another sheet and copies the document reads an image on the paper of the document sheet 2 where the tag is arranged and prepares a printing manuscript will be explained as one example.

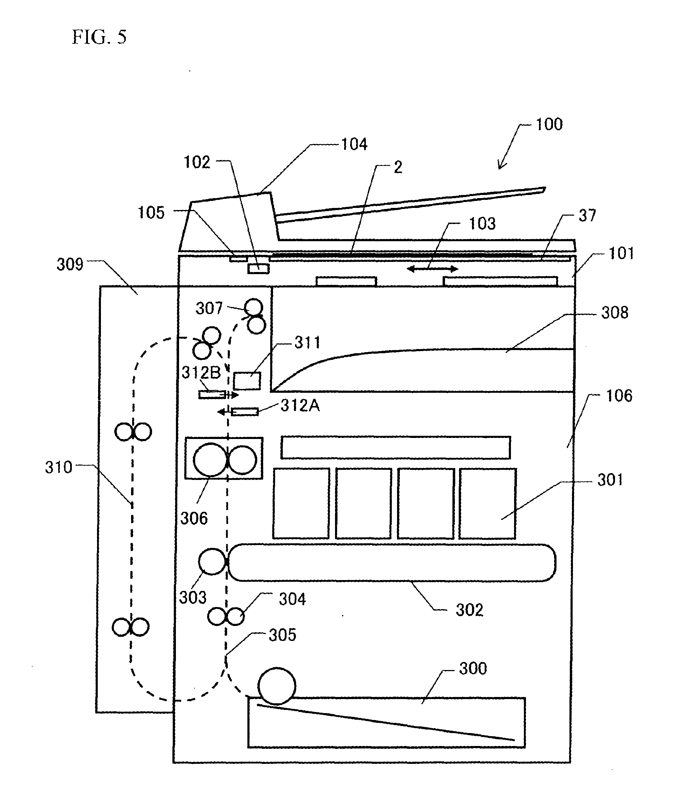

Fig. 5 shows a schematic configuration of the digital multifunction apparatus in this embodiment. This digital multifunction apparatus 100 comprises an image scanner 101 as an image reading unit as similar to the conventional general copier, and while the region of image reading is moved (scanned) relative to the document sheet 2, which is a subject for image reading, reading is conducted by moving an image reading scanner 102 or the document sheet 2. The image reading scanner 102 has a linear light source for image reading, and the irradiated region is relatively moved (scanned) along with the region of image reading relative to the document sheet 2. When the image reading scanner 102 is moved, a document sheet 2 is placed on a clear glass plate 37, which is a platen. The image reading scanner 102 is arranged under the glass plate 37, and it is mounted to be reciprocatable along an arrow 103 direction. The image reading scanner 102 irradiates the entire space of the document sheet 2 placed on the glass plate 37 while it is moved along the arrow 103 direction, and the reflected light image is photoelectric-converted. With this conversion, the image scanner 101 acquires image data of the manuscript.

In the case of moving the document sheet 2, an automatic document feeder 104 doubling as a document cover is used. In this case, the image reading scanner 102 is temporarily secured under another glass plate 105 arranged on a top surface of the image scanner 101. If the automatic document feeder 104 feeds a plurality of document sheets onto the glass plate 105 one by one, the image reading scanner 102 moves relative to the automatic feeder 104. With this movement, the image scanner 101 obtains image data of the manuscript from the space of the document sheet.

A digital multifunction apparatus 100 comprises an image forming unit 106 below the image scanner 101, and the image forming unit 106 accumulates image data obtained by the image scanner 101, transfer the image data via the network, transmits the image data via a facsimile, and prints the image data onto a print sheet.

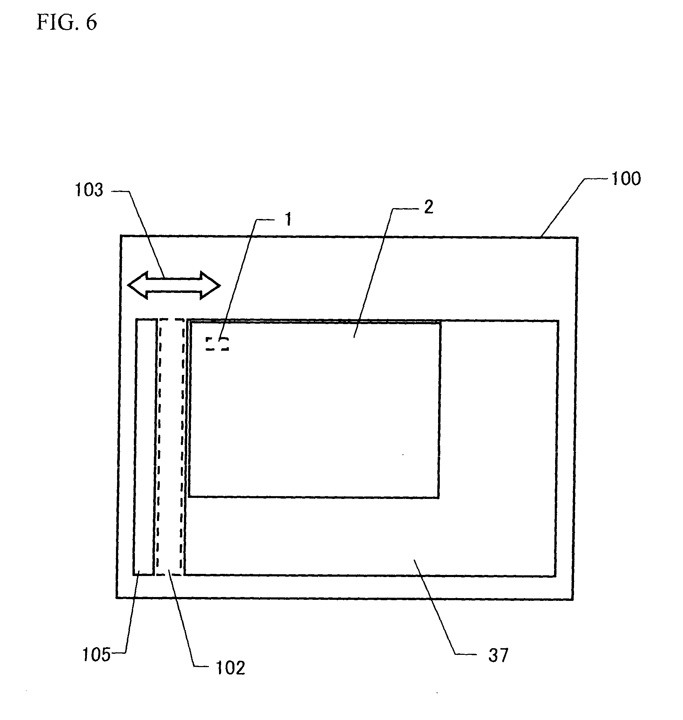

Fig. 6 shows one example where a document sheet is placed on a platen of the digital multifunction apparatus. In this example, the document sheet 2 is placed on the glass plate 37. The longitudinal direction of the document sheet 2 is arranged in the lateral direction in parallel to the arrow 102 direction, and this wireless IC tag 1 shall be at the position closer to the standby position of the image reading scanner 102. Consequently, soon after starting reading, this wireless IC tag 1 shall also be illuminated by the image reading scanner 102. At the time of reading, since the top surface of the image reading unit is covered with the platen cover, only the surface orientated toward the glass plate 37 of the document sheet 2 becomes bright due to the illumination. This wireless IC tag 1 operates in accordance with the command from the reader built-in the digital multifunction apparatus, for example, under this condition.

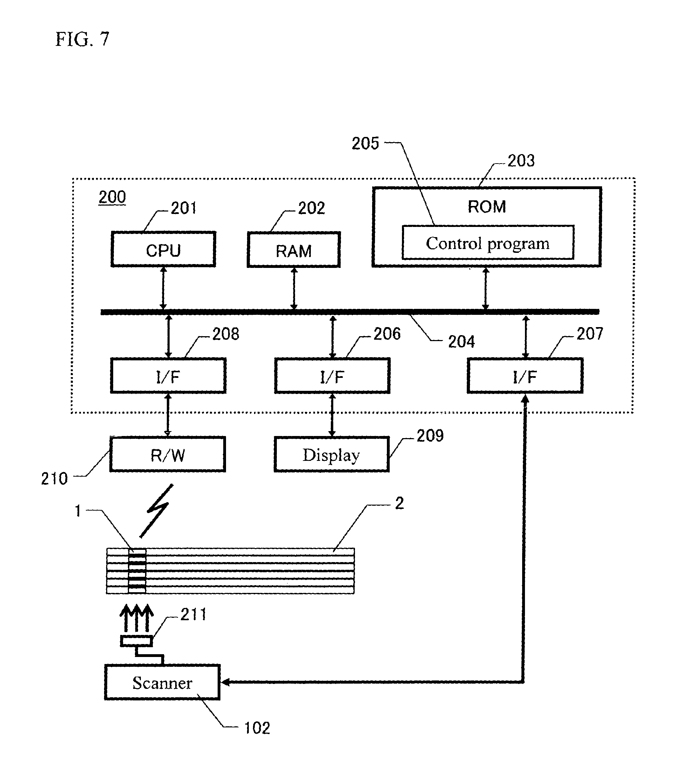

Fig. 7 shows one example of the schematic configuration of the information processing circuit in the digital multifunction apparatus. The digital multifunction apparatus 100 comprises an information processing circuit 200 in order to control the entire device. A general-purpose processing circuit having a CPU 201, a RAM 202 and a ROM 203 can be used for the information processing circuit 200. The CPU 201 is connected to the RAM 202 and the ROM 203 via a bus 204, and reads out a code of a control program 205 contained in the ROM 203, and controls the entire device.

A display 209, the image reading scanner 102 and a reader 210 are connected to the bus 204 via interface circuits 206, 207 and 208, respectively. The CPU 201 conducts input/output into/from these devices via the bus 204 according to an instruction of the control program.

The display 209 is to be arranged on the operation panel of the digital multifunction apparatus 100, and it displays a screen for a user to operate the complex machine 100 or notifying information to a user.

The image reading scanner 102 lights a light source 211 by the control of the CPU 201, and illuminates the space of the document sheet 2 placed on the platen. When a plurality of document sheets 2 is bound, space of the first document sheet 2 from the light source 211 is illuminated among these document sheets 2.

The reader 210 has a wireless communication with the wireless IC tag 1 buried into the document sheet 2. A command is sent to the wireless IC tag 1 within the communication range, and the wireless IC tag 1 is operated in accordance with the command, and responds to the command if necessary. Even when the wireless IC tags 1 buried into the plurality of document sheets 2 are within the communication range of the reader 210, if space of the document sheet 2 situated the closest to the light source 211 is illuminated, only the wireless IC tag 1 buried into said document sheet 2 responds to the reading completion command.

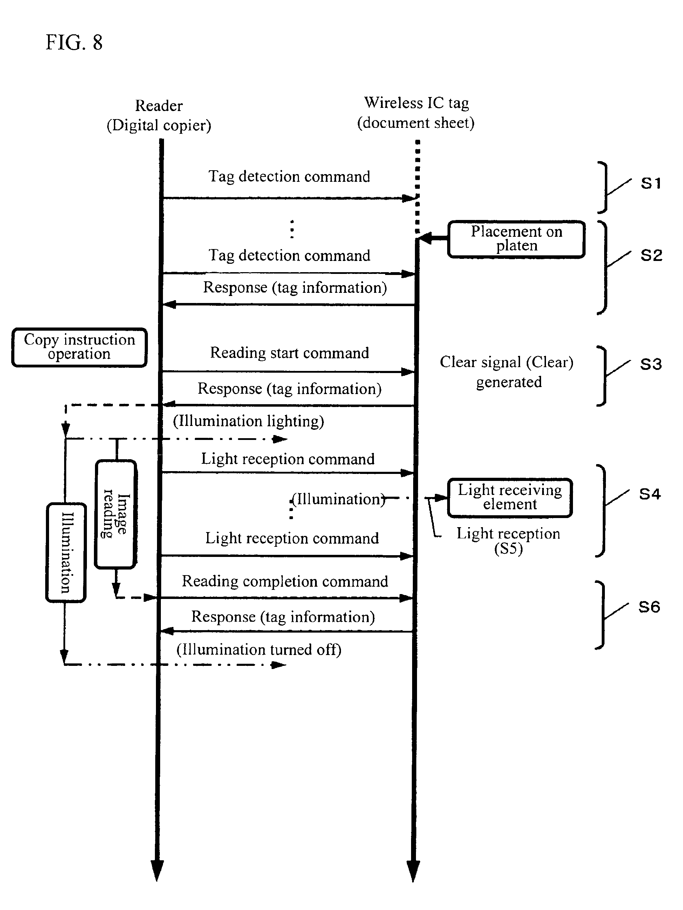

Fig. 8 shows a command sequence of the digital multifunction apparatus 100 and the wireless IC tag 1 for describing the operation of the wireless IC tag 1 in this embodiment.

In Fig. 8, first, the reader incorporated in the digital multifunction apparatus 100 repeatedly emits radio waves at a constant frequency as communication data of inquiry command (referred to as a tag detection command) including information for the detection for the purpose of normally detecting that the wireless IC tag 1 enters into the communicatable range (Step S1 in Fig. 8; hereafter simply referred to as S1; this similarly applied to other steps).

In this situation, when the document sheet 2 is placed on the platen of the digital multifunction apparatus 100, the wireless IC tag 1 buried into the document sheet 2 shall come closer to the reader 210 incorporated in the complex machine 100, and when the wireless IC tag 1 receives the radio waves from the reader 210, the radio carrier wave becomes predetermined strength or more at the antenna 9. With this process, an amount of the power supply generation by the power supply generating circuit 10 exceeds an amount necessary to operate the circuit within the tag 1, and the circuit within the tag 1 becomes operable for a predetermined time.

Then, in the wireless IC tag 1, for the received radio waves, the signal modulated by the radio waves is demodulated by the demodulator circuit 11, and the demodulated signal is processed by the control circuit 12 and the data from the reader 210 is received, and when it is determined that the communication data received from the reader is a detection command, as shown in Table 2, the wireless IC tag I responds to the command regardless of the type of received light information, and data of the tag information based upon the memory information is transmitted to the reader (S2).

In the meantime, when receiving the tag information from the wireless IC tag 1 as a response to the transmission of the detection command, the reader detects the placement of the document sheet 2 on the platen according to the reception. Then, the digital multifunction apparatus 100 can perform necessary processing/control based upon the received tag information. Herein, in this embodiment, the digital multifunction apparatus 100 ignores the received light information contained in the tag information at this point, so it does not perform any special processing/control due to this received light information.

At this time, when there are a plurality of document sheets 2 placed on the platen of the digital multifunction apparatus 100 (for example, a document where a plurality of document sheets are bound), every wireless IC tag 1 arranged in each document sheet 2 responds to the reader; however, it is sufficient that the reader 210 can detect the placement of the document sheets 2 on the platen at this moment, and there is no obstacle because of a plurality of responses.

Next, when a request for start of copying is instructed by an operator, the digital multifunction apparatus 100 that has detected the placement of the document sheets 2 on the platen transmits an inquiry command (referred to as a reading start command) including information indicating the start of image reading from the built-in reader 210 to the wireless IC tag 1 as communication data.

In the meantime, when the wireless IC tag 1 determines that the communication data from the reader 210 that has received data as a reading start command, the control circuit 12 sets the clear signal (Clear) at high voltage ("H") to be pulsed for a predetermine time period. Consequently, the first J-K flip flop 23 and the second J-K flip flop 24 clear each output to low voltage ("L"); therefore, in the memory 14, as shown in Table 1, in the case of this embodiment, the first memory element 26 is selected and the first memory information including 'received light information 1' becomes memory information.

In the wireless IC tag 1, as described above, regarding the outside light to the document sheet 2, the light receiving element 5 receives a light to the front surface 1a and the light receiving element 6 receives a light to the back surface 1b, and a signal according to the presence and orientation of the difference in the light intensity to the front surface 1a and the back surface 1b can be generated within the memory switching circuit 15; however, at this moment, no illumination for image reading at the digital multifunction apparatus 100 is lighted, and both the light receiving elements 5 and 6 receive the outside light around the surroundings where the complex machine 100 is arranged and the amounts of received lights are approximately the same; however, when the platen cover is closed, the light reception is hardly detected. Therefore, at this moment, the states of the signals X2-, Y2 and Y3 in the memory switching circuit 15 are not changed due to the received light signal, and in the memory 14, the first memory element 26 is selected and the first memory information remains as the memory information. This state remains until the states of the signals X2-, Y2 and Y3 are changed due to the light reception of the wireless IC tag 1 thereafter.

Consequently, in the wireless IC tag 1 that has received the reading start command, since the memory information becomes the first memory information and the received light information is 'received light information 1', next, as shown in Table 2, the wireless IC tag 1 responds to the command and transmits tag information to the reader 210 based upon the first memory information as the memory information (S3). Even herein, when a plurality of document sheets 2 (for example, a document where a plurality of document sheets are bound) are placed on the platen of the digital multifunction apparatus 100, every wireless IC tag 1 arranged in each document sheet 2 responds to the reader 210; however, as described below, there is no obstacle because a plurality of responses.

In the meantime, if receiving the tag information from the wireless IC tag 1 as a response to the transmission of the reading start command, the reader 210 regards the completion to clear the first J-K flip flop 23 and the second J-K flip flop 24 by the control circuit 12 of the tag 1. Herein, the reader 210 is designed to receive a response from the plurality of tags 1 for a predetermined time period so as to enable to respond to a case where a plurality of document sheets 2 are placed on the platen of the digital multifunction apparatus 100, and in this embodiment, the received light information ('received light information 1') contained in each tag information shall be ignored even at this moment, and there is no special processing and control for this.

Then, the digital multifunction apparatus 100 lights the illumination for image reading on and starts scanning the image scanner and illumination, and while the illumination is irradiated to the documents, an image to be manuscript is read by a image reading unit that optically reads images.

Herein, while the image is read, the reader 210 supplies the power source to the wireless IC tag 1, and in order to accelerate the reception of illuminated light, it repeatedly emits radio waves regarding the command (referred to as a light reception command) including the information for instruction the light reception at the tag 1 as communication data at a constant frequency.

In the meantime, the wireless IC tag 1 does not respond to the reception of the light receiving command as shown in Table 2 and does not transmit the tag information; however, while the light receiving command can be continuously received, the detection of light reception by the light receiving elements 5 and 6, and operation of generation of a signal by the memory switching circuit 15 based upon the light reception signal will be continued. The operations of the light reception and the signal generation will be continued until a reading completion command described below is received next (this period is referred to as a light reception detecting period) after transmitting the tag information as a response to the reading start command in the Step S3 (S4).

During this light reception detecting period, if illumination for image reading at the digital multifunction apparatus 100 is scanned and the illumination is received by the light receiving element 5 or 6 at the wireless IC tag 1, one light receiving element facing the orientation of irradiation receives a stronger light than the other light receiving element at that time, the output signal X2 of the first J-K flip flop 23 is set to the high voltage ("H").

Herein, if what is placed on the platen of the digital multifunction apparatus 100 is, for example, a document where a plurality of sheets are bound, only the wireless IC tag 1 arranged on the top surface of the document sheets 2 facing the irradiation orientation of the illumination among the bound sheets receives the illumination, and operates to set the output signal X2 of the first J-K flip flop 23 at the high voltage ("H"). As described above, in the tag 1 arranged in the document sheet 2 that is not situated on the top surface of the document, a threshold of the second comparator 21 is set so as not to set the signal X2 at the high voltage ("H") even due to the irradiation of illumination from the complex machine 100. Furthermore, for the setting of the threshold value of the second comparator 21, it may be designed such that the tag 1 can set can set the value to be variable in accordance with the instruction / information from the reader 210.

Then, in the memory 14 of said wireless IC tag 1 that has received the illumination, as shown in Table 1, the second or the third memory element is selected, and the second or third memory information becomes the memory information (S5).

Herein, which one the type of the memory information is, the second memory information or the third memory information, depends upon the state of outputs of the second J-K flip flop 24 relating to the light reception signal (signals X2 and X2-) as shown in Table 1, and it is specified according to the orientation of front or back. In other words, when the document sheet 2 is placed on the platen facing its front surface orientated toward the irradiation of the illumination, said wireless IC tag 1 regards the third memory information including 'received light information 3' as the memory information, and when the document sheet 2 is placed on the platen facing its front surface orientated toward the irradiation of the illumination, said wireless IC tag 1 regards the second memory information including 'received light information 2' as the memory information.

Then, if the digital multifunction apparatus 100 completes to read the image, the reader 210 transmits an inquiry command (referred to as a reading completion command) including the information indicating the image reading completion to the tag 1 as the communication data.

In the meantime, said wireless IC tag 1 where the second or third memory element is selected and the second or third memory information is set to the memory information receives the reading completion command, and as shown in Table 2, it transmits the tag information based upon the second or third memory information to the reader 210 as the response to the command (S6).

Herein, if a plurality of document sheet 2 (for example, a document where a plurality of document sheets are bound) are placed on the platen of the digital multifunction apparatus 100, each of the wireless IC tags 1 buried into each document sheet 2 receives the reading start command as described above, and all selects the first memory element 26 in the memory, respectively. Then, after that, when the reading an image at the digital multifunction apparatus 100, only said tag 1 that has received the illumination for the image reading switches the selection in the memory 14 to the second or third memory element; in the meantime, the other tags 1 that have not received the illumination maintains the selection of the first memory element without switching the selection of memory element in the memory 14. Therefore, even when a plurality of the document sheets 2 are placed, in the wireless IC tags 1 that have not received the illumination, the first memory element is selected and the first memory information is set to the memory information, and as shown in Table 2, they do not respond to the reader 210 regarding the reading completion command.

Further, since said wireless IC tag 1 that has received the illumination maintains the state where the memory information is the second or third memory information and the received light information has been updated, as described above, when the document sheet 2 is placed by facing the front surface orientated toward the irradiation of the illumination, the memory information is based upon the third memory information including 'received light information 3', and when the document sheet 2 is placed by facing the back surface orientated toward the irradiation of the illumination, the memory information is based upon the second memory information including 'received light information 2'.

As described above, the reader 210 receives the tag information from the wireless IC tag 1 arranged on the top of document sheet 2 facing orientated toward the irradiation of illumination among the sheets even when what is placed on the platen of the digital multifunction apparatus 100 is, for example, a document where a plurality of sheets are bound. In addition, the orientation of the document sheet 2, either facing up or down, can be detected according to the received light information contained in that tag information, as described above: for example, when the received light information included in the tag information is 'received light information 3', the document sheet 2 is placed by facing the front surface orientated toward the irradiation of the illumination, and when the received light information is 'received light information 2', the document sheet 2 is placed by facing the back surface orientated toward the irradiation of the illumination. This detection can be conducted by the reader 210 or the information processing circuit 200.

After that, the digital multifunction apparatus 100 light the illumination for image reading, and completes to read one image by the image reading unit.

Herein, when image reading by the image reading unit is conducted for a plurality of document sheets 2, the operation from Step S1 to Step S6 shall be repeated by the number of the document sheets 2.

As described above, when a predetermined radio wave is received from the reader 210, regarding the information exchange with the reader 210, based upon a received light signal obtained by receiving an outside light, the response to the reader 210 may not be conducted depending upon the received light signal, or the tag information to be exchanged includes received light information according to the received light signal in a portion; therefore, the wireless IC tag 1 can vary tag information by the number of directions/orientations to enable to receive the outside light by changing the direction/orientation of the illumination light, which will be the outside light to a tangible entity (for example, the document sheet 2, such as printing paper) where the tag 1 is arranged, even if the number of the tags is one.

Then, if the direction/orientation of the illumination is set to a predetermined one as the illumination for image reading when copying a document by the digital multifunction apparatus 100, the tag information can be different per direction/orientation where the tangible entity is placed (for example, per surface of back or front of the document sheet 2) by the number of directions to be able to receive the outside light. Therefore, the reader 210 or the information processing circuit 200 can detect the presence of the document sheet 2; concurrently, can simultaneously acquire the direction/orientation (for example, orientation of the front surface or the back surface of the document sheet 2) where the document sheet 2 is placed by setting the irradiation direction/orientation at the predetermined one.

Further, even in the case of, for example, a document where a plurality of document sheets 2, where this wireless IC tag is arranged, respectively, are bound, when the document is copied, it can be designed such that only the tag of the document sheet 2 facing the platen where the light for reading the document is illuminated reacts to said illumination light and responds to the reader 210, and tags arranged in the other document sheets 2 not under the predetermined illumination condition will not respond to the illumination light, data shall not collide among the plurality of tags that have received radio wave, and it is possible to detect only the tag under the predetermined illumination condition, and a user/operator who conducts copying can place a bundle of document sheets 2 without separating the document one by one when copying.

For example, when each sheet in a bundle of a plurality of document sheets 2 is a printed sheet with two-sided printing and the setting of the digital multifunction apparatus 100 is to copy only back surfaces of each document sheet 2, respectively, the digital multifunction apparatus 100 can distinguish the tag information on the back surface of the document sheet 2 from tag information on the front surfaces and other tag information in other document sheets 2. When the tag information includes control information of the digital multifunction apparatus 100 or data of overlapped image, the digital multifunction apparatus 100 can operate in accordance with the tag information on the back surface of each document sheet 2. Even if the back surface of the document sheet 2 is a color image and the front surface is a monochrome image, the digital multifunction apparatus 100 can perform color printing by referring to the tag information on the back surface. It is unnecessary for a user to designate a printing mode for both back and front surfaces of each document sheet 2. In addition, when detecting the reading of the back surface of each document sheet 2, the digital multifunction apparatus 100 can notify a user the detection by display of the completion of image reading of the back surface on the display 209 or by sounding a buzzer due to the control of the information processing circuit 200. With this design, it is possible to reduce the possibility to repeatedly copy the same space of the document sheet 2 by mistake. Further, when reading of the front surface of the document sheet 2 is detected, the reading of the image on the front surface can be notified to a user due to the control of the information processing circuit 200. A user can realize that he/she has read the image on the front surface of the document sheet 2 by mistake.

As described above, in the wireless IC tag, when back and front surfaces of a substance can be detected, and even when the object is a form of a bundle of a plurality of document sheets 2, information on the document sheet 2 on the top of the bundle can be transmitted.

Furthermore, the received light information ('received light information 1', 'received light information 2' and 'received light information 3' in this embodiment) is information indicating by sorting to one of three states (values); however, the division may be further sorted. In addition, in this embodiment, data of received light information are code indicating states (combinations) of processing signals (signals X1 and X2) obtained by processing the received light signal, which is generated by receiving a light at the wireless IC tag 1; however, they can indicate or express signal states of the received light signal (for example, a voltage value of each received light signal), and the received light information may indicate these states or include the information indicating these states.

As described above, if the received light signals can be detected and processes in detail, the presence and direction of the irradiation (light reception by the tag 1) can be accurately detected, and if a set threshold value within the circuit of the tag 1 can be set as to be variable in accordance with the instruction/information from the reader 210, the adaptation can be more accurate according to the situation and more accurate detection can be conducted.

Further, as received light information, for example, in the case of acquiring tag information including data of voltage value of each received light signal by the reader 210, the information processing circuit 200 and the reader 210 of the digital multifunction apparatus 100 can be operated as a light irradiation direction identification means that identifies the direction/orientation of light irradiation to a medium based upon the data.

### Embodiment 2

The wireless IC tag relating to the present invention to be described in this embodiment (in this embodiment, this is also simply referred to as this tag) can perform data communication with a reader via radio waves as similar to the tag in Embodiment 1, and this is equipped with a light transmission window, and the transmissivity of a light in the light transmission window is not uniform at least in one direction relative to the direction of light transmission, and it forms a pattern, which is different from any other transmissivity, and this tag is equipped with one light receiving element inside. In this embodiment, an example where this tag is arranged by burying into a recording medium (document sheet), such as a print sheet, printed paper and other paper for document, will be described.

Herein, since the document sheet where this tag is buried is similar to that in Embodiment 1, Fig. 1 will be incorporated in this embodiment, as well.

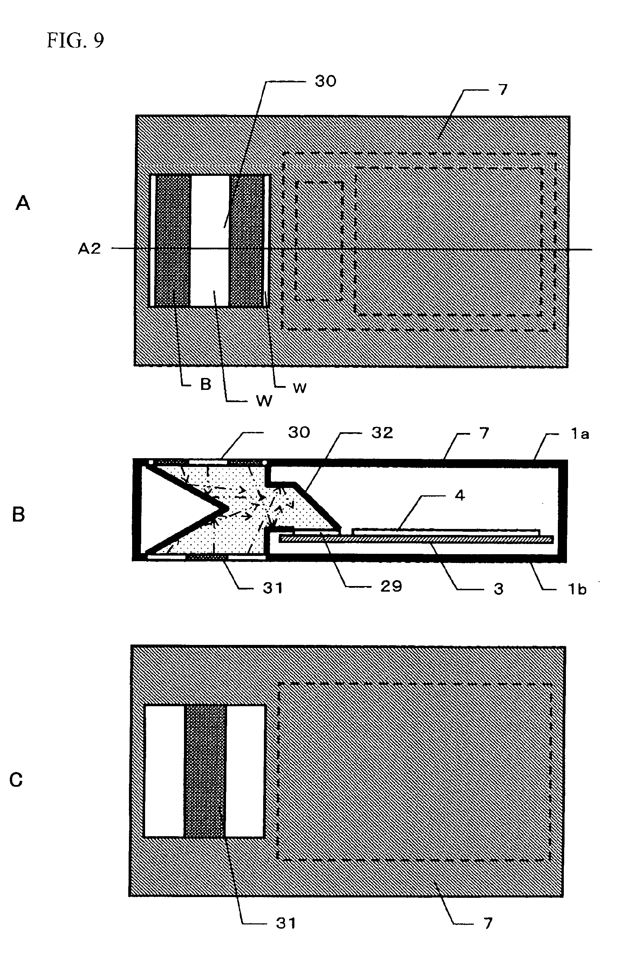

Fig. 9 shows patterns of the wireless IC tag 1, and Fig. 9A is top view, Fig. 9B is a cross section view at the line A2 and Fig. 9C is a bottom view.

In Fig. 9, the circuit element group 4 comprising the wireless IC tag 1 is mounted onto the circuit substrate 3.

A light receiving element 29 is a photodiode in this embodiment, and this is mounted onto the circuit substrate 3 along with the circuit element group 4. This light receiving element 29 is for receiving a light from the outside of the document sheet 2 as described below.

The tag cover 7 is a cover, which maintains the circuit substrate 3 where the light receiving element 29 and the other circuit elements are mounted and included, and which is used a resin for blocking an effect of humidity from the outside as a raw material, and light transmission windows 30 and 31 that can transmit the outside light to the wireless IC tag 1 through are established in a section of the front surface (referred to as a tag front surface) (1a) and a back surface (referred to as a tag back surface) (1b), respectively, and other sections are formed to be opaque so as not to transmit a light from the outside of the document sheet 2 through the inside of the tag 1.

Each of the light transmission windows (30 and 31) forming a portion of the task cover 7 is for further transmitting the outside light to the wireless IC tag 1 through the inside of the tag 1 using a clear resin as a raw material, and the transmissivity of a light is high in the white portions (W and w) shown in the drawings and is low in the dark shaded portion (B). This light transmissivity pattern in the direction of the line A2 is designed to be different between the front surface (1a) and the back surface (1b) of the tag I as described in the drawing. In this embodiment, as described in the drawing, the pattern in the direction of the line A2 at the light transmission window 30 of the tag front surface 1a is an alignment of w-B-W-B-w in respective order regarding the center portion as W, and that at the light transmission window 31 of the tag back surface 1b is an alignment of W-B-W in respective order regarding the center portion as B. Herein, 'w' has narrower width compared to W.

A light guiding member 32 is a clear resin, and enters an outside light into the wireless IC tag 1, which is transmitted through the light transmission windows (30 and 31), into the member as indicated with the two-dot chain line arrows in the drawing, and the incident light is reflected by the internal surface of the member, and the reflected light is outputted to a light receiving part of the light receiving element 29 located outside the member, so the outside light to the tag 1 can be guided to the light receiving part of the light receiving element 29. With this light guiding member 32, the light receiving element 29 can receive any light, which has transmitted through the light transmission window 30 or 31.

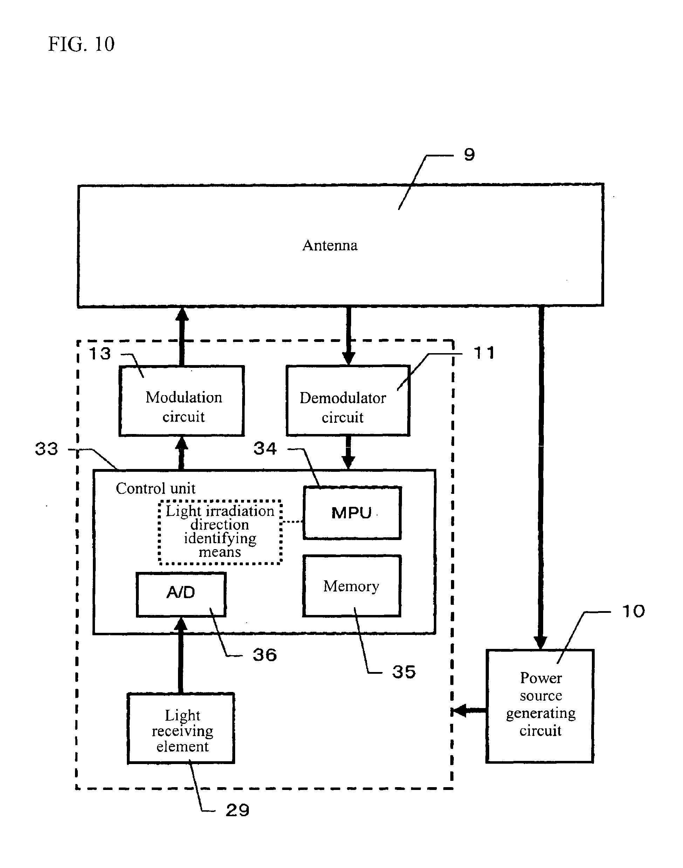

Fig. 10 is a block diagram showing a circuit configuration of the wireless IC tag 1 comprising the light receiving element 29 and the circuit element group 4.

In Fig. 10, the antenna 9, the power source generating circuit 10, the demodulator circuit 11, the modulation circuit 13 and the memory 14 are similar to those in Embodiment 1.

The light receiving element 29 is a circuit element mounted onto the circuit substrate 3 by orientating the light receiving part toward the one end surface of the light guiding member 32 in Fig. 9, and provides an electric signal according to an amount of irradiated light to tag front surface 1a or the tag back surface 1b from the outside of the tag 1.

A control unit 33 is composed with a microprocessing unit 34 (referred to as CPU), which is a central processing unit (CPU), and a computer using a memory element (only a portion relating to a memory region for maintaining at least a portion of data in tag information is referred to as a memory 35 in this embodiment for convenience of explanation), and the demodulator circuit 11, the modulation circuit 13 and the light receiving element 29 are used as input & output, and input/output signals into/from them are processed and the function & operation of the tag 1 are controlled. Then, the control unit 33 is equipped with an analog/digital (A/D) converter 36 that converts an electric signal amount (voltage) transmitted by the light receiving element 29 into a digital value, and the CPU 34 enters an amount of light at the time of receiving a light by the light receiving element 29 as a digital value timely, and signal processing can be conducted.

A memory 35 is composed of three memory blocks (these are referred to as the first memory block, the second memory block and the third memory block, and in this embodiment, the information stored in the memory blocks is referred to as memory information, respectively), and they are allocated to the different space of address space in the CPU 34, respectively, and the CPU 34 distinguishes the blocks according to the address to be accessed and the memory data in that block can be written and read.

Then, each of memory blocks from the first to third has 4,096 bits (4k bits) of memory capacity of data; therefore, memory information up to 4,096 bits can be stored (when the memory information is distinguished by the type, the memory information (first type) stored in the first memory block is referred to as first memory information, the memory information (second type) stored in the second memory block is referred to as second memory information, and the memory information (third type) stored in the third memory block is referred to as third memory information). Then, the first memory information 'received light information 1' (for example, a numerical value of '1'), the second memory information 'received light information 2' (for example, a numerical value of '2') and the third memory information 'received light information 3' (for example, a numerical value of '3') are stored including in a part of the memory information as the received light information.

Herein, the received light information is information indicating the state of received light by the wireless IC tag 1, and 'received light information 1', 'received light information 2' and 'received light information 3' are different data (values in this embodiment) from each other according to each state of received lights, and in this embodiment, 'received light information 2' is defined as indicating that the light receiving element 29 receives a light through the light transmission window 31 of the tag back surface 1b. Similarly, 'received light information 3' is defined as indicating that the light receiving element 29 receives a light through the light transmission window 31 of the tag back surface 1a. In addition, 'received light information 3' is defined as indicating neither of those states.

Again, the control unit 33 that is equipped with the CPU 34 and the memory 35 can control functions/operations of the wireless IC tag 1, and perform the data communication with the reader 210 via radio waves. Herein, the relationship between the information for the data communication (referred to as an inquiry command or simply referred to as a command) and operation of the response of the tag 1 to the command is similar to that in Embodiment 1, and Table 2 is incorporated. Then, when receiving the radio waves from the reader 210, this wireless IC tag 1 operates the response, by the command transmitted from the reader 210 and the received light information; in other words, the response varies per state of light reception in the tag 1.

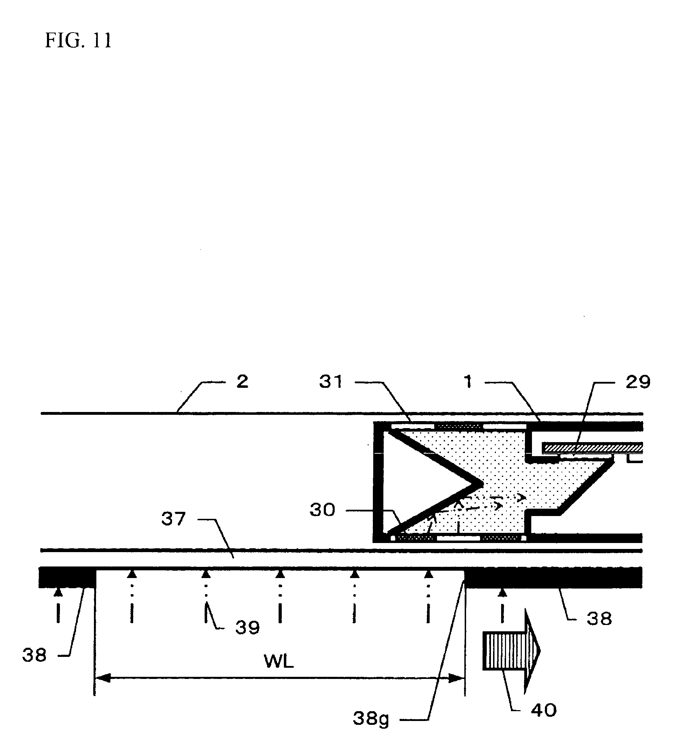

Fig. 11 is a pattern diagram showing by enlarging the cross section (equivalent to Fig. 1B) in the state where the document sheet 2 where this wireless IC tag 1 is buried is placed on the platen of the digital multifunction apparatus (image scanner) 100.

In Fig. 11, the document sheet 2, which is a subject for image reading, is placed on the glass plate 37, and the image scanner illuminates a light for image reading through this glass 37 from the bottom and images are read.

A light blocking plate 38 arranged inside the image scanner has an opening with predetermined width (WL) (longer than those of the lit transmission windows (30 and 31) of the wireless IC tag 1) at a portion of the plate that does not transmit any light through, and a light (light beam 39) from the illumination and a reflect light by the document sheet 2 are transmitted through only the opening portion, and at least the light (light beam 39) from the illumination can be blocked to the document sheet 2 other than the opening portion. Then, the image scanner moves the opening portion of the light blocking plate 38 toward the direction of an arrow 40 along with the movement (scanning) of the image reading region and illuminated region, and while the illumination is irradiated through the operating part, the image can be read.

Herein, an end 38g of the opening part of the light blocking plate 38 is formed to be sharp to some extent, and when the tag 1 receives a light (light beam 39) from the illumination, it is designed to make the presence of the light beam received by the tag 1 (a difference in the amounts of received lights) before and after the movement of the end 38g clear.

In the above-mentioned configuration, the operation of this wireless IC tag 1 will be described next.

Herein, as one example, as similar to Embodiment 1, when the digital multifunction apparatus 100 where the reader 210 is incorporated, an image on the space of the document sheet 2 is read and set as a manuscript, and the manuscript is printed onto another sheet and the document is copied reads an image on the space of the document sheet 2 where the tag 1 is arranged and the obtainment is prepared as a manuscript for printing, the operation of the tag 1 will be described next. Furthermore, since the command sequence of the digital multifunction apparatus and the wireless IC tag 1 is substantially similar to that in Embodiment 1, the command sequence will be described by citing Fig. 8.

In Fig. 8, the procedures up to Step 2 are similar to those in Embodiment 1.

Thereafter, when a request for start, such as copying, is instructed by an operator, the digital multifunction apparatus 100 that has detected the placement of the document sheet 2 on the platen transmits an inquiry command (referred to as reading start command) including information indicating the start of image reading to the wireless IC tag I from the built-in reader 210 as the communication data.

In the meantime, when the wireless IC tag 1 determines the received communication data from the reader 210 as a reading start command, the CPU 34 shall read and write the first memory information containing received light information 1 from/into the memory 35 as the memory information. Then, the wireless IC tag 1 responds to the command as shown in Table 2, and transmits tag information based upon the first memory information, which is the memory information, to the reader 210 (S3). Herein, when a plurality of document sheets 2 (for example, a document where a plurality of document sheets are bound) are placed on the platen of the digital multifunction apparatus 100, as similar to Embodiment 1, every wireless IC tag 1 arranged in each of the document sheets 2 responds to the reader 210; however; as described below, there is no obstacle due to the plurality of responses.

In the meantime, when the reader 210 receives the tag information from the wireless IC tag 1 as a response to the transmission of the reading start command, the control unit 33 of the tag 1 regards the first memory information becoming available for reading and writing as the memory information due to the reception. Herein, the reader 210 is designed to receive a response from the plurality of tags 1 for a predetermined time period so as to respond to the case of a plurality of document sheets 2 placed on the platen of the digital multifunction apparatus 200, and in this embodiment, the received light information ('received light information 1') contained in each tag information shall be ignored even at this moment, and no special processing and control due to the reception.

Then, the digital multifunction apparatus 100 illuminates a light for image reading and starts scanning the image scanner and illumination, and the illumination is irradiated to the document; in the meantime, an image is read by the image reading unit that optically reads an image to be a manuscript.

Herein, while the image is read, the reader 210 supplies the power source to the wireless IC tag 1, and in order to accelerate the reception of illuminated light, radio waves using the light reception command including information for instructing the light reception at the tag 1 as the communication data are repeatedly sent at constant frequency.

In the meantime, the wireless IC tag 1 does not respond to the reception of the light reception command as shown in Table 2 and tag information is not transmitted in this embodiment; however, while the light reception command is continuously received, the received light at the light receiving element 29 and the state of the intensity of received light based upon the received light signal are continuously detected. This operation to receive a light and to generate a signal is conducted during the light reception detection period until a reading completion command mentioned below is received next after the tag information is transmitted as a response to the reading start command in the step S3 (S4).

During this light reception detection period, the light receiving element 29 transmits a signal according to the amount of received light, and an illumination for image reading is scanned in the digital multifunction apparatus, and when the illumination is received via the light transmission windows 30 and 31 with pattern by transmissivity of a light, the output signal indicates a temporal change according to the patterns of light transmissivity in the light transmission windows 30 and 31.

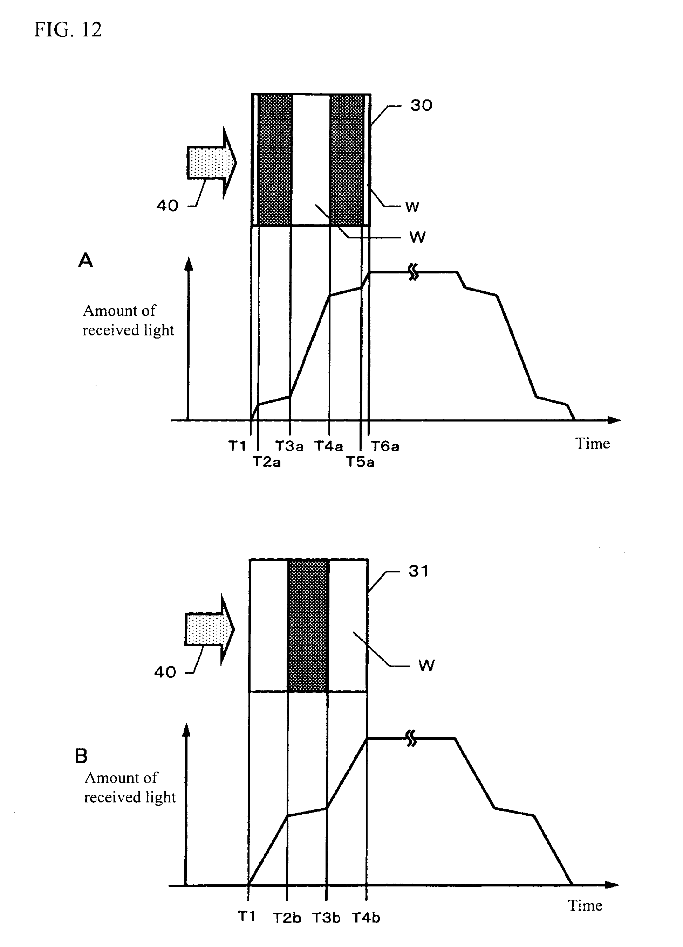

Fig. 12 shows pattern diagrams for explaining the temporal change associated with the scanning of the illumination of image scanner in the arrow 40 direction regarding the amount of the received light at the light receiving element 29. Then, Fig. 12A shows a temporal change of amount of received light when an image on a front surface of the document sheet 2 is read; in other words, when the front surface 1a of the tag I is orientated toward the image scanner, and Fig. 12B shows a temporal change of the amount of received light when an image on a back surface of the document sheet 2; in other words, when the back surface 1b of the tag 1 is orientated toward the image scanner.

In Fig. 12, the amount of received light at the light receiving element 29 of the wireless IC tag 1 is substantially 0 (zero) when the illumination of the image scanner is scanned and moved (direction of the arrow 40), because the light beam 39 is blocked by the light blocking plate 38 and does not reach the light transmission windows 30 and 31 during the time when the section of the light blocking plate 38 with regard to the light transmission windows 30 and 31 of the tag 1 is other than the opening part, and then, when the section is overlapped with the opening portion due to the movement of the illumination, the amount of received light is increased as shown in the graph (referred to as received light graph) according to the position of the movement to the light transmission windows 30 and 31 of the end 38g of the light blocking plate 38, and then, when the entire light transmission windows 30, 31 face the opening part of the light blocking plate 38, the amount of received light at that time shall be maintained during the period. In addition, after that, when the section of the light blocking plate 38 to the light transmission windows 30 and 31 moves apart from the opening part, the opposite condition from before is presented.

Herein, when the section of the light blocking plate 38 with regard to the light transmission windows 30 and 31 of the tag 1 is overlapped with the opening part, since the amount of received light at the light receiving element 29 becomes in proportion to the area of the portions with high transmissivity (W and w) within the light transmission windows 30 and 31 overlapped with the opening part, the change in the graph (increase or decrease; this change is referred to as a received light change) is shown according to the movement of the opening part. Then, the aspect of the received light change varies according to the difference of the light transmissivity pattern in the light transmission windows 30 and 31, and as a specific example, the aspects become different as shown in Figs. 12A and 12B in the received light graph of Fig. 12.

Then, the CPU 34 detects the aspect of the change in the amount of received light by the light receiving element 29 during the light reception detection period, and identifies the difference in the change aspect; i.e., the difference between Fig. 12A and Fig. 12B in the light reception graph of Fig. 9, and which one, the light transmission window 30 or 31, the illumination light has passed through can be determined. When the CPU 34 has determined that the illumination light has transmitted through the light transmission window 30, it can be determined that the front surface of the document sheet 2 is orientated toward the image scanner; in the meantime, when the CPU 34 has determined that the illumination light has transmitted through the light transmission window 31, it can be determined that the back surface of the document sheet 2 is orientated toward the image scanner. As described above, the control unit 33 has a function as a light irradiation direction identifying means in the wireless IC tag 1 by the CPU 34.

At this time, since absolute values of each unit quantity of the vertical axis (amount of received light) and the horizontal axis (time) in each received light graph in Figs. 12A and 12B vary under the condition, these will not be specified to one value, respectively; however, in the above-mentioned identification, as long as the received light change in each received light graph can be detected, it becomes possible to identify and determined by the CPU 34.

In other words, for example, since the speed of scanning movement of illumination of image scanner varies according to product specifications of the image reading speed of the digital multifunction apparatus 100, the absolution value (time) of the horizontal axis (temporal axis) cannot be specified. Then, in the light transmission window 30 (the portion W and the portion B are aligned in order of w-B-W-B-w using W as a center), the portion w whose width is narrower than W is arranged at the end of the window, respectively; therefore, the start and end of the light reception at the light transmission window 30 associated with the scanning of illumination can be certainly detected (when the portion B is connected to the end of the window, it is difficult to detect the moment when the illumination scanning starts the light receiving window), and the detection of the portion B is ensured, and it enables the comparison between the time of the portion B and the time of the portion W. As described above, if the connection of the portion B to the end of the window, the detection of the pattern in the light transmission window 30 becomes ensured, and it enables the identification of the light reception change at the CPU 34.

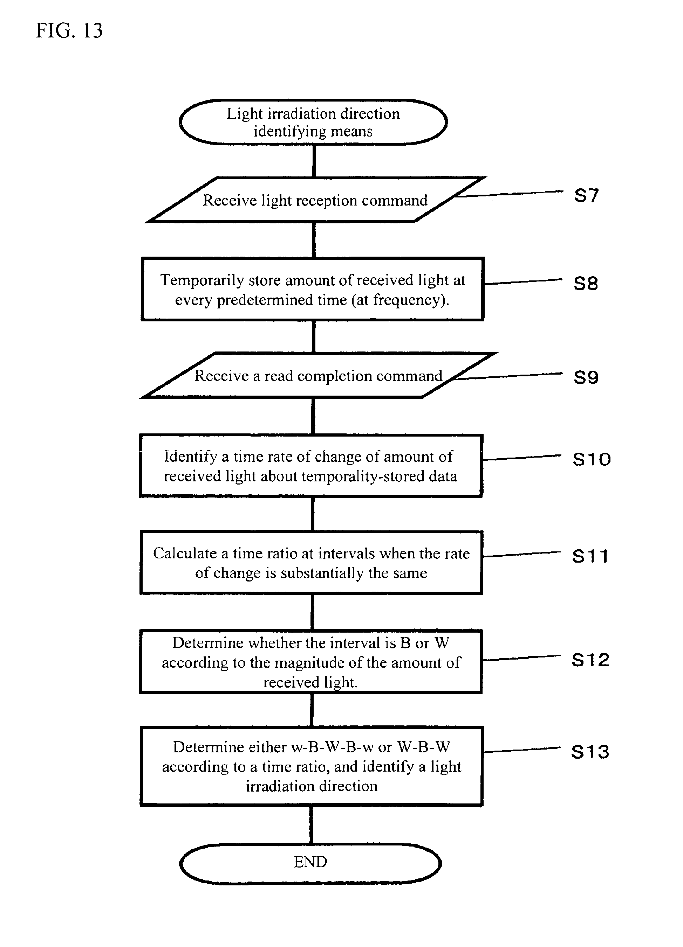

Fig. 13 shows a processing flowchart of light irradiation direction identifying function at the wireless IC tag 1 as described above.

In Fig. 13, the time period from Step 7 (S7) to Step 9 (S9) corresponds to Step 4 (S4) in Fig. 8. The CPU 34 receives the light reception command (S7), and then, the amount of received light by the light receiving element 29 is sequentially written and temporarily stored into the memory 35 and at every predetermined time interval (at a predetermined frequency) (S8) until the reading completion command is received (S9).

Next, when the CPU 34 receives the reading completion command (S9), the data about the amount of received light stored in the memory 35 are read out from the first one in sequence, and every clock time when data are written, a difference of data before and after the data writing is obtained and a time rate of change of the amount of received light is obtained (S10). Then, the point when the time rate of change exceeds a predetermined value is detected as a time T1 in Fig. 12.

In addition, while the CPU 34 percepts the intervals when the rate of change is substantially unchanged (between T1 and T2a of Fig. 12A, and between T1 and T2b of Fig. 12 (b)), a point when the rate of change is greatly changed (decreased) is detected as a clock time T2a (Fig. 12A) or T2b (Fig. 12B). Continuously, in addition, while the CPU 34 percepts the intervals when the rate of change is substantially unchanged (between TT2a to T3a of Fig. 12A, between T2b and T3b of Fig. 12B), a point when the rate of change is greatly change (increased) is detected as a clock time T3a (Fig. 12A) or T3b (Fig. 12B). As described above, the CPU 34 detects each clock time from T1 to T6a or T1 to T4b (S 11). Herein, for the detection of each lock time, each clock time does not have to be an absolute time, but time in between the clock time can be determined, and detection of a ratio of the time may be acceptable.

The CPU 34 that has detected each lock time when a rate of change of amount of received light is greatly changed next compares amounts of received light in each interval (for example, it is preferable to obtain a mean value in the interval) between a plurality of intervals, and whether each interval is the portion B or the portion W is determined (S12). Herein, for the amount of received light at each interval, as long as a difference between a plurality of intervals can be determined, any index is usable.

Then, it is determined that the pattern of light transmissivity at the light transmission windows 30 and 31 is either w-B-W-B-w or W-B-W according to each time and the alignment of the portion B and the portion W, and it is identified that the irradiation direction of light is either the tag front surface 1a or the tag back surface 1b (S13).

As described above, the CPU 34 can identify and determine the front or back surface of the document sheet 2 orientated toward the imager scanner according this determination.

According to the identification and determination by the CPU 34, the wireless IC tag 1 sets either the second memory information stored by including 'received light information 2' or the third memory information stored by including 'received light information 3' as the memory information based upon the determination of the front or back surface of the document sheet 2 orientated toward the image scanner (S5). Then, the condition where the second memory information or the third memory information is set as the memory information is maintained until the wireless IC tag 1 receives the next tag detection command and responds to it.

As described above, when the document sheet 2 is placed on the platen by facing the front surface against the irradiation direction of the illumination, the wireless IC tag 1 sets the third memory information including 'received information 3' as the memory information, and when the document sheet 2 is placed on the platen by facing the back surface against the irradiation direction of the illumination, the wireless IC tag 1 sets the second memory information including 'received information 2' as the memory information.

After that, when the digital multifunction apparatus 100 has finished reading the image, the reader 210 transmits an inquiry command (referred to as a reading completion command) including information indicating the reading completion of image to the tag 1 as communication data.

In the meantime, said wireless IC tag 1 where the second memory information or the third memory information has been set as the memory information receives the reading completion command and transmits the tag information based upon the second memory information or the third memory information to the reader 210 as a response to the command as shown in Table 2 (S6).

Herein, when what is placed on the platen of the digital multifunction apparatus 100 is, for example, a document where a plurality of sheets are bound, only the wireless IC tag 1 arranged in the document sheet on the top surface orientated toward the direction of irradiation of illumination among the bound sheets receives the illumination and conducts the above-mentioned operation. As described above, regarding the tag 1, which is arranged in the document sheets 2 not placed on the top surface of the document, the sensitivity of the received element 29 is set whose level of an output signal is excessively great even by the irradiation of the illumination from the complex machine 100. Therefore, even if there are a plurality of document sheets 2, the wireless IC tags 1 that have not received the illumination still maintain the first memory information as the memory information, and as shown in Table 2, they will not respond to the reader 210 regarding the reading completion command.

Further, in said wireless IC tag 1 that has received the illumination, the memory information is the second memory information or the third memory information and the received light information is maintained in the updated state, the tag information to be transmitted is based upon the second memory information or the third memory information, and as described above, when the document sheet 2 is placed by facing its front surface against the direction of irradiation of the illumination, the tag information is based upon the third memory information including received light information 3, and when the document sheet 2 is placed by facing its back surface against the direction of irradiation of the illumination, the tag information is based upon the second memory information including 'received light information 2'.

As described above, even if what is placed on the platen of the digital multifunction apparatus 100 is the document where a plurality of sheets are bound, the reader 210 receives the tag information from the wireless IC tag 1 arranged in the document sheet 2 on the top surface facing the irradiation direction of the illumination among the bound sheets, and whether the document sheet 2 faces up or down can be detected, for example, when the received light information is 'received light information 3' according to the received light information contained in said tag information, the document sheet 2 is placed on the platen by facing its front surface against the irradiation direction of the illumination, and the received light information is 'received light information 2' according to the received light information contained in said tag information, the document sheet 2 is placed on the platen by facing its back surface against the irradiation direction of the illumination.

Then, the digital multifunction apparatus 100 switches the illumination for image reading off and completes the reading of one image at the image reading unit.

Herein, when images on a plurality of document sheets 2 are read by the image reading unit, the operations from Step S 1 to Step S6 shall be repeated by the number of the document sheets 2.

As described above, the light transmissivity in the light transmission windows is not uniform at least in one direction relative to the direction where a light is transmitted, and it forms a different pattern from any other patterns, and even if the wireless IC tag is equipped with one light receiving element, as similar to Embodiment 1, whether or not the sheet where the tag is buried faces up or down can be detected, and even if the document is used in the form where a plurality of document sheets 2 are bound, the information on the surface of the top of the pile can be transmitted.

Furthermore, since the light blocking plate 38 is for making the boundary between an irradiated region and a non-irradiated region clear to some degree for the illumination to the document sheet 2, for example, even if the distribution of the amount of illumination itself has a clear boundary, if a temporal change in the result of a graph for received lights as shown in Fig 12 is clear to some extent and it is possible to identify the difference between the cases in Fig. 12A and in Fig. 12B, the light blocking plate 38 may be omitted; however, it is effective to clarify the temporal change and to improve the accuracy of identification.

Further, the light transmission window may have patterns formed by the light transmissivity in two directions at right angles to each other, respectively.

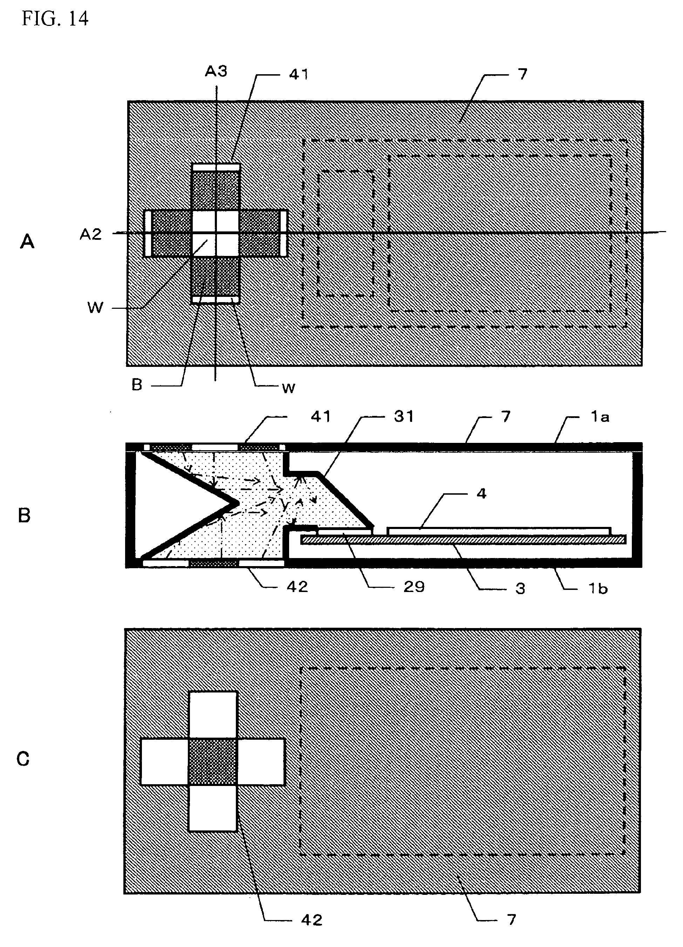

Fig. 14 shows patterns of the wireless IC tags 1 formed by light transmissivity in the light transmission windows in two directions at right angles to each other, and Fig. 14A is a top view, Fig. 14B is a cross sectional view and Fig. 14C is a bottom view.

In Fig. 14, light transmission windows 41 and 42 form a portion of the tag cover 7 as similar to the light transmission window (30 and 31) in Fig. 9, and they are for transmitting the outside light to the wireless IC tag 1 into further inside of the tag 1 using a clear resin as a material, and the light transmissivity is high in the white portions (W) is high and low in the dark shaded portions (B) in the diagram. Then, the patterns of this light transmissivity are different between the front surface (1a) and the back surface (1b) of the tag 1.

Herein, the light transmission windows 41 and 42 have different patterns of light transmissivity from those of the light transmission windows 30 and 31, and as shown in the diagram, in addition to the line A2, they have another pattern in the direction of the line A3 where the alignment of the portions W and B along this direction are at right angles to those in the direction of the line A2. In other words, in this embodiment, the patterns are alignment of w-B-W-B-w in the light transmission window 41 on the tag front surface 1a using the center as W, and W-B-W in the light transmission window 42 on the tag back surface 1b using the center as B both in the direction of the line A2 and the direction of line A3, which is at right angles to each other. Herein, the width of w is narrower than that of W.

As described above, if the patterns of light transmissivity in the light transmission windows are arranged in two directions at right angles to each other, even if the document sheet 2 where the wireless IC tag 1 is buried is placed either direction on the platen of the digital multifunction apparatus relative to the movement (scanning) direction of scanner (illumination) for image reading, the amount of received light by the light receiving element 29 shows the temporal change as shown in Fig. 11 described above due to the movement (scanning) of the illumination. With this design, regardless of the placement direction of the document sheet 2 on the platen surface, in other words, even if length and breadth of the document sheet 2 are orientated toward any direction, the CPU 34 detects the change and identify the change aspect, and then, determines which one the illumination light has passed through the light transmission window 41 or 42.

Furthermore, in the embodiment, the example of explanation about the wireless tag 1 buried into the document sheet was explained; however, the wireless IC tag 1 may be attached to the document sheet 2. For example, the wireless IC tag 1 is attached to both the front surface and the back surface of the document sheet 2. In this case, only the wireless IC tag 1 facing the platen shall transmits a response to the reading completion command to the reader 210. With this design, it is possible to distinguish the front and back surfaces of the document sheet. In addition, if the patterns are arranged in the light transmission section, the direction where the document sheet is placed can be distinguished.

Further, the digital multifunction apparatus 100 can be further equipped with a reader for writing tag information into the wireless IC tag 1 when printing and outputting an image to a medium, such as paper where the wireless IC tag 1.

In the example of Fig. 5, the image formation part 106 comprises four image formation units 301 corresponding to cyan, magenta, yellow and black, for the purpose of forming a color image on a print sheet housed in a paper cassette 300. These image formation units 301 form a toner image of each color on an intermediate transfer belt 302, and the four-color toner images are overlapped. The toner images are transferred to the print sheet by a transfer unit where the intermediate transfer belt 302 and the transfer roller 303 are facing against each other. Resist rollers 304 synchronize the print sheet fed to a conveyance path 305 from the paper cassette 300 to the toner image, and convey the sheet to the transfer unit. A fuser 306 fuses the toner images transferred onto the print sheet. An ejection roller 307 ejects the print sheets to an eject tray 308.

Further, this digital multifunction apparatus 100 is equipped with a reversing unit 309 for two-sided printing. The reversing unit 309 is equipped with a reverse conveyance pathway 310 for returning a sheet that has passed the fuser 306 to the upstream of the resist roller 304. If the sheet is conveyed to the reverse conveyance pathway 310, the image formation surface of the sheet is reversed. After printing of one surface of the print sheet is completed, the sheet is not ejected but the image formation surface is reversed by the reversing unit 309, and the other surface of the print sheet is printed, and the two-sided printing is accomplished.

In addition, this digital multifunction apparatus 100 is equipped with a reader 311 for writing tag information into the wireless IC tag 1 buried into the print sheet and a light source 312A for illuminating the wireless IC tag 1 between the fuser 306 and the ejection roller 307. In this case, the reader 311 and the light source 312A are also connected to the information processing circuit 200. For example, when the front surface of the print sheet is orientated toward the light source 312A side, if the wireless IC tag 1 enters into the communicatable range of the reader 311, a writing command of tag information is transmitted to the wireless IC tag 1 under the condition where the light source 312A is not illuminated. If both the light receiving elements 5 and 6 do not receive the outside light or the difference in the amounts of received light is small, the wireless IC tag 1 writes the tag information according to said command into the first memory element 26. When the writing is completed, the information processing circuit 200 lights the light source 312A, and the reader 311 sends a writing command of the tag information to the wireless IC tag 1. Under this situation, in the wireless IC tag 1, since the light receiving element 5 has received predetermined light, the tag information according to the command is written in to the third memory element 28. Then, the image formation surface of the print sheet is reversed by the reversing unit 309. When the reverse conveyance pathway 310 is passed, the back surface of the print sheet shall be orientated toward the light source 312 side. When the wireless IC tag 1 re-enters into the communicatable range of the reader 311, the information processing circuit 200 lights the light source 312A and illuminates the wireless IC tag 1, and the reader 311 sends a writing command of tag information to the wireless IC tag 1. Under this situation, in the wireless IC tag 1, since the light receiving element 6 has received a predetermined light, the tag information according to the command is written into the second memory element 27. As described above, different tag information can be written into a plurality of memory elements of the wireless IC tag 1, respectively.

When the wireless IC tag 1 buried into the print sheet has already stored the tag information, the reader 311 can read out the tag information from the wireless IC tag 1 as similar to the case of writing the tag information. Further, the tag information stored in the wireless IC tag 1 may be re-written.

According to this configuration, when printing & output, when a medium, such as a print sheet, is conveyed, a light is irradiated as an outside light of the wireless IC tag 1, and at least information stored in the wireless IC tag 1 in the tag information can be exchanged. Consequently, the digital multifunction apparatus 100 can irradiate a light that enables the wireless IC tag 1 to distinguish the received light states regarding a plurality of directions or orientations of the medium, and the tag information containing received light information according to the received light signal by the wireless IC tag 1 that has received the irradiated light is written or read into/from the wireless IC tag 1, and the information can be exchanged.

As described above, the reader 311 exchanges the tag information with the wireless IC tag 1 buried into a medium, such as a print sheet, a plurality of steps of amounts of irradiation of the light source 312A are prepared and the wireless IC tag 1 may distinguish the step according to the amount of received light. According to this distinction, the reader 31 can exchange the tag information corresponding to a plurality of direction of the medium with the wireless IC tag 1 without changing the conveyance direction of the medium.

In the case of two-sided printing, the example where different tag information is written into a plurality of memory elements, respectively, was described; however, the present invention shall not be limited to this example. In the case of one-side printing, since tag information is written into the three memory elements 26 to 28, respectively, the digital multifunction apparatus 100 may be equipped with a light source 312B that illuminate a print sheet from the surface at the opposite side of the light source 312A. In the case of writing the tag information into the first memory element 26, the information processing circuit 200 turns both the light sources 312A and 312B off. In the case of writing the tag information into the third memory element 28, the information processing circuit 200 turns the light source 312A on and blacks the light source 312B off. In the case of writing the tag information into the second memory element 27, the information processing circuit 200 lights the light source 312A out and turns the light source 312B. If these procedures are followed by the time of ejecting the print sheet, even in the case of one-side printing, different tag information can be written into all of the plurality of memory elements, respectively.

In the case of one-side printing, the tag information corresponding to said surface can contain printed-completion information indicating printing completion. When the print sheet where one-side printing has been conducted is re-housed in the paper cassette 300 and the other surface will be printed, if the printing completion information is used, the digital multifunction apparatus 100 can determine whether or not said surface has been printed. For reading of the printing completion information, for example, a reader and a light source should be arranged immediately above the paper cassette 300. If the printing completion information is acquired form the light source and the reader, the digital multifunction apparatus 100 can stop the conveyance of the print sheet. With this design, further printing onto the printed surface can be avoided.

In addition, the printing completion information can also be used when an image is read from the space of the print sheet and the image is printed. The digital multifunction apparatus 100 stops printing the read image onto other print sheet if the tag information corresponding to a surface whose image to be read does not contain the printing completion information. With this design, unnecessary printing can be avoided.

Further, the tag information to be written into the wireless IC tag 1 can contain confidential information or access information for accessing to the confidential information. The access information is, for example, network address, a site name, a file name and a password of the site when the confidential information is situated in the site on the network. When the digital multifunction apparatus 100 acquires confidential information or tag information containing access information from the wires IC tag 1, when printing using said tag information as an image, if the access condition is not satisfied, information excluding the confidential information or the access information from the tag information is printed as an image. The access condition is, for example, to match a user ID and a password. If the access condition is not satisfied, the confidential information will not be visibly imaged. In the meantime, if the access condition is satisfied, the tag information including the confidential information or the access information is printed as an image. When the access information indicates network address or a site name, the digital multifunction apparatus 100 accesses to the site via the network using the access information, and acquires the confidential information. Then, the wireless IC tag 1 itself or the confidential information acquired from the site can be visibly image by overlapping onto a manuscript image or only confidential information can be printed. In addition, functions relating to authorities according to authority levels to the confidential information in the password can be differentiated. In addition, handling of confidential information can be differentiated per function of the digital multifunction apparatus 100. For example, the access condition and the authority level can be differentiated between a case of facsimile transmission or image transfer and a case of printing output.

Then, regarding these printed matters, if different securities are applied to front and back surfaces (for example, network addresses, passwords or others are different), respectively, confidential information is linked to images printed on the front or back surfaces, and the information can be disclosed to only specific persons.

Further, when a document where a plurality of document sheets are bound is a two-page spread manuscript, such as a magazine, a catalogue or a book, a front surface of one document sheet and a back surface of another document sheet simultaneously face the platen of the digital multifunction apparatus 100. In this case, the reader 210 communicates with two wireless IC tags until image reading of the manuscript is completed. When the two wireless IC tags 1 enter into the detectable range of the reader 210, a collision preventing function, such as differentiating a time slot, is arranged in the reader 210, and the reader 210 is sequentially communicated with each wireless IC tag 1. Even in this case, the reader 210 can distinguish two document sheets 2 comprising the two-page spread, between the front and back surfaces. Further, since the wireless IC tags 1 buried into the document sheets 2, which do not face against the platen, do not respond to the reading completion command, a user who copies the two-page spread manuscript does not have to separate one document sheet from the two-page spread manuscript but places the document as is.

Further, in the above-mentioned embodiments, when receiving a predetermined ratio wave from the reader 210, the wireless IC tag 1 sends tag information to the digital multifunction apparatus 100, and the direction and orientation of placement of the document sheet 2 are transmitted to the digital multifunction apparatus 100. Instead of this, the direction and orientation of placement of the document sheet 2 may be transmitted to the digital multifunction apparatus 100 by using an outside light reflecting means having a surface that can change so as to form a pattern where the reflectance to a light is not uniform in one-dimensional or two-dimensional direction in a predetermined direction/orientation.

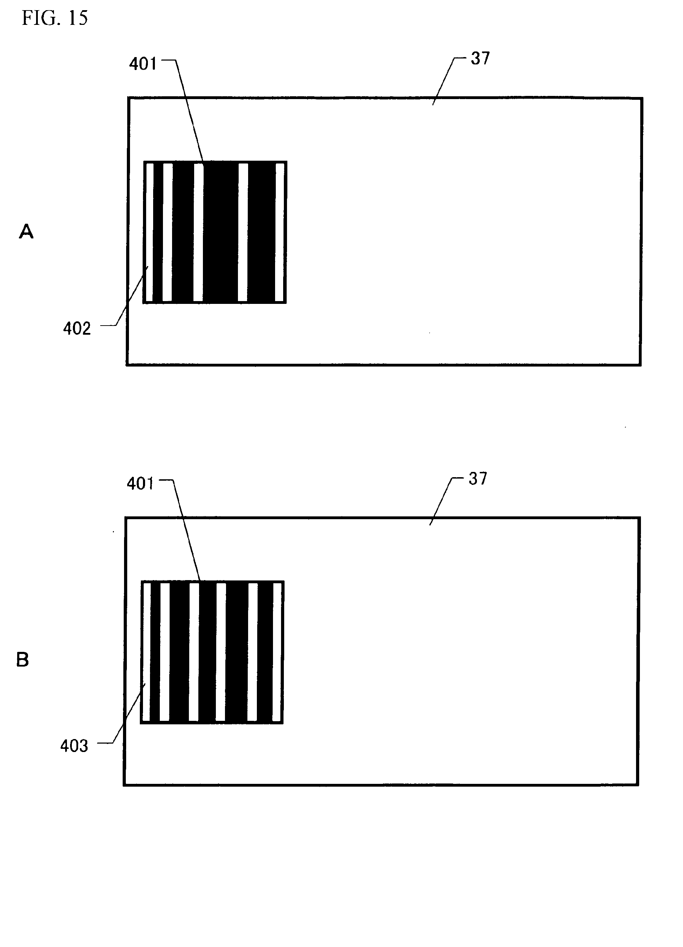

Fig. 15 further shows patterns of another tag example, and Fig. 15A is a top view and Fig. 15B is a bottom view. This wireless IC tag 1 is equipped with a liquid crystal display unit 401 on the surface of the task cover 7. The wireless IC tag 1 displays a specific pattern where reflectance to a light is not uniform on the liquid crystal display unit 401 in accordance with an instruction from the reader 210 incorporated in the digital multifunction apparatus 100. As shown in Figs. 15A and 15B, the wireless IC tag 1 displays a plurality of different patterns 402 and 403 in accordance with the instruction from the reader 210. Herein, a pattern that is not uniform in one-dimensional direction is adopted; however, it is also possible to adopt a pattern that is not uniform in two-dimensional direction. For that pattern, one-dimensional or two-dimensional barcode patterns can be used.

After the reader 210 performs the communication to instruct the pattern display, the information processing circuit 200 of the digital multifunction apparatus 100 extracts a pattern that matches any of a plurality of standard patterns pre-stored in the ROM 203 from the image obtained by reading the space of the document sheet 2. Since the reflectance to the light in the pattern displayed on the liquid crystal display unit 401 is not uniform, the pattern is illuminated when reading an image, the pattern is contained in the read image. The information processing circuit 200 extracts the pattern from the image.

The ROM 203 stores information, for example, indicating the direction and orientation of the document sheet 2, in association with each standard pattern. When the information processing circuit 200 extracts a pattern that matches any of the standard patterns, the information in association with the standard pattern is read out from the ROM 203. The reader 210 exchanges the tag information with the wireless IC tag 1 based upon the read information. When the read information indicates the back surface or the front surface of the document sheet 2, the reader 210 can acquire the tag information corresponding to the back surface or the front surface of the document sheet 2.

As in this example, the wireless IC tag 1 can have a plurality of liquid crystal display units 401 in predetermined direction or orientation. Further, one liquid crystal display unit 401 may have a plurality of pattern display regions with regard to a predetermined direction or orientation.

As described above, since the wireless IC tag 1 is equipped with a liquid crystal display unit having a surface that can be changed so as to form a pattern, where reflectance to a light is not uniform in one-direction or two-directional direction, the information processing circuit 200 of the digital multifunction apparatus 100 can select the wireless IC tag that responds to its own instruction, and in addition, the wireless IC tag 1 can acquire information from said tag due to the data communication via electromagnetic induction or radio waves, and can acquire the information by a pattern formed by a light reflected by the surface due to a difference in reflectance in each section on the surface.

It is possible to use the wireless IC tag of the present invention for a document sheet or a print sheet to be used in an information processor, such as a digital multifunction apparatus, that reads an image on space of a document as a manuscript, and that prints the manuscript onto another sheet and copies the document, and it is possible to use a reader that exchanges information with said wireless IC tag in an information processor, such as a digital multifunction apparatus.

## Claims

1. A wireless IC tag that is attached to a tangible entity or is arranged by being included in a portion, where information can be stored and electric power is supplied, and that performs data communication with a reader existing outside the tangible entity via electromagnetic induction or radio waves, and can exchange information stored in said tag or other tag information with the reader, comprising:
an outside light receiving means that distinguishes an outside light in a plurality of directions/orientations to the tangible entity where said tag is arranged and can receive the outside light, respectively, wherein
when predetermined radio waves are received from the reader, regarding the exchange of information with the reader, the wireless IC tag may perform no response to the reader depending upon a received light signal based upon the received light signal obtained by receiving the outside light by the outside light receiving means, or the tag information to be exchanged contains received light information according to the received light signal at least in a portion.

2. The wireless IC tag according to claim 1, wherein the outside light receiving means are a plurality of light receiving elements, which are orientated toward predetermined direction/orientation, respectively.

3. The wireless IC tag according to claim 1, wherein
the outside light receiving means comprises:
a plurality of light transmission sections, which transmit a light irradiated from the predetermined direction/orientation into the inside of the tag, respectively, and
a plurality of light receiving elements, which correspond to one of the light transmission sections, respectively, and receive the light transmitted through the corresponding light transmission sections.

4. A wireless IC tag that is attached to or is included in a tangible entity, and that can store information, and where electric power is supplied wirelessly, and that performs data communication with a reader existing outside the tangible entity, and that can exchange information stored in said tag or other tag information with the reader, comprising:
a plurality of light transmission sections that transmit a light irradiated from a predetermined direction/orientation relative to the tangible entity where said tag is arranged into the inside of said tag, respectively, and
one or more light receiving elements that receive the light transmitted through the light transmission sections, wherein
the plurality of light transmission sections form a pattern where transmissivity of a light is not uniform but different from any other patterns in at least one direction relative to the direction where the light transmits through, respectively; and
said tag receives a light, which has been transmitted through any one of the plurality of light transmission sections, and when predetermined radio waves are received from the reader, regarding the exchange of information wit the reader, the tag may perform no response to the reader depending upon a received light signal based upon the received light signal corresponding to the pattern formed by the light transmissivity, or the tag information to be exchanged contains received light information according to the received light signal at least in a portion.

5. The wireless IC tag according to claim 4, wherein in the light transmission section, transmissivity of a light forms the patterns in two directions at right angles to each other relative to the direction where the light transmits through.

6. The wireless IC tag according to claim 4, wherein the patterns formed by the transmissivity of the light are axisymmetric relative to an axis that crosses the center between the one end side and the other end side in the direction of forming the patterns.

7. The wireless IC tag according to claim 4, wherein regarding the patterns formed by the transmissivity of the light, the transmissivity of the light at the end in the direction formed by the pattern is the same with all of the plurality of transmission sections.

8. A wireless IC tag that is attached to or is included in a tangible entity, and that can store information, and where electric power is supplied wirelessly, and that performs data communication with a reader existing outside the tangible entity, and that can exchange information stored in said tag or other tag information with the reader, comprising:
an outside light reflecting means having surfaces where a reflectance to a light can be changed so as to form a pattern, which is not uniform in one-dimensional or two-dimensional direction, in a predetermined direction or orientation, respectively, wherein
the wireless IC tag receives predetermined communication from the reader, and a predetermined pattern based upon the communicated information appears on a surface of the outside light reflecting means.

9. The wireless IC tag according to claim 8, comprising a plurality of the outside light reflecting means, wherein
surfaces where patterns are formed faces a predetermined direction/orientation, respectively, or one of the plurality of the outside light reflecting means has a plurality of the surfaces and each surface faces a predetermined direction/orientation.

10. The wireless IC tag according claim 8, wherein
in the surface where the pattern is formed, the pattern where a reflectance to a light is not uniform in one-dimensional or two-dimensional direction is made from liquid crystal.

11. The wireless IC tag according to claim 8, wherein
the pattern formed by the outside light reflecting means is a one-dimensional or two-dimensional barcode pattern.

12. The wireless IC tag according to claims 1, 4 or 9, wherein
the plurality of predetermined directions/orientations are directions where the front surface and the back surface of the tangible entity face.

13. The wireless IC tag according to claim 1 or 4, wherein
the received light information is received light signal information indicating a content of the received light signal itself, or contains the received light signal information.

14. The wireless IC tag according to claim 1 or 4, comprising:
a light receiving element that receives a light and generates voltage or an electric current, and
a capacitor means that stores electric charges, wherein
an electric power obtained by the light receiving element is stored in the capacitor means, and the electric power is used as a portion of electric power for an electric circuit of said tag.

15. Paper, a film or other document medium where the wireless IC tag according to any one of claims 1 to 14 is arranged.

16. A wireless IC tag reader that is attached to or is included in a tangible entity, and that can store information, and where electric power is supplied wirelessly, and that performs data communication with a wireless IC tag having a function to distinguish lights irradiated from a plurality of predetermined directions/orientations to the tangible entity and to receive the lights, and that can perform data communication via electromagnetic induction or radio waves, and that can exchange information stored in the wireless IC tag, received light information relating to the light reception of the lights or other tag information, with the wireless IC tag, comprising:
a light irradiation direction identifying means that can extract received light information obtained by distinguishing lights irradiated from a plurality of predetermined directions/orientations to the tangible entity by the wireless IC tag and by receiving the lights; and that identifies the direction/orientation of the light irradiation to the tangible entity based upon the information, wherein
the wireless IC tag reader performs data communication with the wireless IC tag via radio waves and exchanges information; identifies the direction/orientation of light irradiation to the tangible entity by the light irradiation direction identifying means based upon the received light information in the received tag information; and can specify a direction/orientation of posture of the tangible entity where the wireless IC tag is arranged.

17. The wireless IC tag reader according to claim 16, wherein
an irradiation region includes a light irradiation means that irradiates a light, which is moved or scanned relative to a constant direction on one surface of the tangible entity.

18. An information processor performing processing, such as reading an image on a medium surface, to a document using paper as a medium, wherein
an irradiation region includes:
an illumination means that irradiates a light to be moved or scanned relative to a constant direction on one surface of the medium as an illumination of image reading;
an image reading section that optically reads an image on the medium surface using a light from the illumination means as an illumination light to the medium;
a wireless IC tag reader that is attached to or is included in the medium, and that can store information, and where electric power is supplied wirelessly, and that performs data communication with a wireless IC tag having a function to distinguish lights irradiated from a plurality of predetermined directions/orientations to the tangible entity and to receive the lights, and that can perform data communication via electromagnetic induction or radio waves, and that can exchange information stored in the wireless IC tag, received light information relating to the light reception of the lights or other tag information with the wireless IC tag; and
a light irradiation direction identifying means that can extract received light information obtained by distinguishing lights irradiated from a plurality of predetermined directions/orientations to the tangible entity by the wireless IC tag and by receiving the light; and that identifies the direction/orientation of the light irradiation to the tangible entity based upon the information; and
the information processor
exchanges information with the wireless IC tag by data communication via radio waves;
identifies the direction/orientation of light irradiation to the tangible entity by the light irradiation direction identifying means based upon the received light information in the received tag information; and
can specify a direction/orientation of posture of the tangible entity where the wireless IC tag.

19. An information processor processing, such as reading out an image on a medium surface, to a document using paper where a wireless IC tag is arranged as a medium having surfaces where a reflectance to a light can be changed so as to form patterns not uniform in one-dimensional or two-dimensional direction, wherein
the information processor comprises and includes:
an illumination means that irradiates a light to be moved or scanned relative to a constant direction on one surface of the medium as illumination for image reading;
an image reading unit that optically reads an image on the medium surface using a light from the illumination means as an illumination light to the medium;
a pattern recognition means that extracts a specific pattern from the image and recognizes information indicated by the pattern; and
a wireless IC tag reader that is attached to or is included in the medium, and that can store information, and that can perform data communication with a wireless IC tag where electric power is supplied via radio waves, and that can exchange information stored in the wireless IC tag or other tag information with the wireless IC tag, wherein after the wireless IC tag reader communicates with the wireless IC tag to instruct to form a predetermined pattern where a reflectance to a light is not uniform in one-dimensional or two-dimensional direction, when the pattern recognition means extracts said predetermined pattern and can recognize the information indicated by the pattern, the tag information is exchanged with the wireless IC tag based upon said recognized information.

20. An information processor processing, such as printing output of an image to a medium, such as paper, comprising:
a medium conveyance means that conveys the medium and sends the medium out of the apparatus;
a wireless IC tag reader that is attached to or is included in the medium, and that can store information, and where electric power is supplied wirelessly, and that performs data communication with a wireless IC tag having a function to distinguish lights irradiated from a plurality of predetermined directions/orientations to the tangible entity and to receive the lights, and that can perform data communication via electromagnetic induction or radio waves, and that can exchange information stored in the wireless IC tag, received light information relating to the light reception of the light or other tag information with the wireless IC tag; and
a light irradiation means that irradiates a light to a surface of printing onto the medium; wherein
when printing output, when the medium conveyance means is conveying the medium, the light irradiation means irradiates a light, and at least in information stored in the wireless IC tag in the tag information is exchanged based upon the irradiation.

21. The information processor according to claim 20, wherein
in the processing of the printing output of information containing confidential information or related to the confidential information, the information itself regarding the confidential information, or information for accessing to said confidential information is stored in the wireless IC tag, and information excluding any information relating to confidential is printed onto the medium, such as paper, as an image.
